(19) Europäisches Patentamt
European Patent Office
Office européen des brevets

(11) EP 0 755 052 B1

(12) EUROPEAN PATENT SPECIFICATION

(45) Date of publication and mention of the grant of the patent:
17.11.1999 Bulletin 1999/46

(51) Int Cl.[6]: G11B 7/24

(21) Application number: 96111774.4

(22) Date of filing: 22.07.1996

# (54) Optical recording medium

Medium für optische Aufzeichnung

Médium d'enregistrement optique

(84) Designated Contracting States:
DE FR GB NL

(30) Priority: 20.07.1995 JP 18401395
01.08.1995 JP 19662495
29.08.1995 JP 22052795
27.10.1995 JP 27995395

(43) Date of publication of application:
22.01.1997 Bulletin 1997/04

(73) Proprietor: MITSUI CHEMICALS, INC.
Tokyo (JP)

(72) Inventors:
- Misawa, Tsutami
Yokohama-shi, Kanagawa (JP)
- Sugimoto, Kenichi
Yokohama-shi, Kanagawa (JP)
- Nishimoto, Taizo
Kamakura-shi, Kanagawa (JP)
- Tsuda, Takeshi
Yokohama-shi, Kanagawa (JP)
- Umehara, Hideki
Yokohama-shi, Kanagawa (JP)
- Takuma, Keisuke
Yokohama-shi, Kanagawa (JP)

(74) Representative: Zumstein, Fritz, Dr. et al
Dr. F. Zumstein
Dipl.-Ing. F. Klingseisen
Bräuhausstrasse 4
80331 München (DE)

(56) References cited:
EP-A- 0 023 386
EP-A- 0 188 001
EP-A- 0 483 382
EP-A- 0 572 973
WO-A-95/02848

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

BACKGROUND OF THE INVENTION

(1) Field of the Invention

The present invention relates to an optical recording medium, specifically to an optical recording medium which is capable of recording and reproducing in wavelengths of plural lasers.

(2) Description of the Related Art

CD-R (CD-Recordable) has been developed and proposed as a write-once type optical recording medium which meets compact disk (hereinafter abbreviated as CD) standards (for example, Nikkei Electronics, No. 465, p. 107, January 23, 1989 issue, and OPTICAL DATA STORAGE DIGEST SERIES vol. 1, p. 45, 1989). This CD-R is laminated with a recording layer, a reflective layer and a protective layer in this order on a transparent resin substrate, and irradiation of a laser beam to the above recording layer at a high power causes physical or chemical change on the recording layer and allows information to be recorded thereon in the form of pits. The pits thus formed are irradiated with a laser beam at a low power to detect a change in a reflectance, whereby the information recorded in the pits can be reproduced. Such an optical recording medium uses a near infrared semiconductor laser having a wavelength falling in a range of 770 to 830 nm for recording and reproducing and meets CD standards such as a red book and an orange book, and therefore is characterized by that it is usable for CD players and CD-ROM players.

In recent years, the development of a semiconductor laser having a wavelength shorter than 770 nm has been advanced, and red semiconductor lasers having wavelengths of 680 nm and 635 nm have been put into practical use (for example, Nikkei Electronics, No. 592, p. 65, October 11, 1993 issue). Shortening of wavelengths of lasers for recording and reproducing can make beam spots small and therefore makes it possible to prepare an optical recording medium capable of recording and reproducing in a high density. Actually investigated are optical recording media having a large capacity and capable of recording information such as dynamic digital images for a long time by using short wavelengths of semiconductor lasers and a data compression technique, and players therefor (for example, Nikkei Electronics, No. 589, p. 55, August 30, 1993 issue and No. 594, p. 169, November 8, 1993 issue). However, even if such high density optical recording media using a red laser and the players therefor have been developed, interchangeability with conventional systems which have already been prevailed widely can not be ignored from a viewpoint of continuity of softwares. That is, required are optical recording media having such interchangeability that recording/reproducing or reproducing is possible with a red laser and recording/reproducing or reproducing is possible as well with a conventional near infrared semiconductor laser having a wavelength of 780 nm.

Conventional CD and CD-ROM media have less dependence on wavelength in terms of a reflectance and can readily be reproduced with players for high density-media. Meanwhile, since conventional CD-R media use dyes in a recording layer, the optical characteristics depend greatly on wavelengths, and as a result, the reflectances of the CD-R media change to a large extent depending on the wavelengths. For example, while the reflectances to light beam having a wavelength of about 780 nm come up to 65 % or more, the reflectances to red laser having a wavelength selected from a range of 620 to 690 nm are as small as about 10 % and the modulation degrees are small as well because a dye used in a recording layer has a large absorptivity and a small refractive index. In addition, large deformation is observed on the recording wave forms. A reflectance of about 10 % makes it difficult to detect signals, and even if they could be detected by any means, an error rate and a jitter increase, and therefore reproducing with a reproducing player for high density-media will be difficult. Further, there have been created the problems that since the reproduction light is inferior in stability and deterioration is caused merely by reproducing the same truck several times in succession, such conventional CD-R media can not be fit for practical use. Further, caused is low-to-high recording that a recorded part has a larger reflectance than that of a non-recorded part, and the polarity is reverse to that of a conventional CD (high-to-low recording). Accordingly, such CD-R media are not preferred.

A function-separating recording layer in which a dye layer having a high reflectance and causing no change of the state by heat energy of a laser beam and an organic substance layer having a light absorbing power are laminated in order is proposed in Japanese Patent Application Laid-Open No. 58-112794 (1983) as an example of an optical recording medium provided with two-layered dye. A medium in which a cyanine dye or merocyanine dye having a high reflectance and an organic light absorbing layer are laminated is proposed in Japanese Patent Application Laid-Open No. 60-239948 (1985). Dye recording layers having different optical constants are proposed in Japanese Patent Application Laid-Open No. 63-153192 (1988). A medium in which two kinds of organic dyes having different transmittance and absorptance to a laser beam having a certain wavelength are laminated is proposed in Japanese Patent Application Laid-Open No. 1-110193 (1989). Further, a recording layer comprising an organic two-layer having different transmittance or melting points to a laser beam having a certain wavelength is proposed in Japanese Patent Application Laid-Open No. 4-330649 (1992). However, these proposals are confined to improvement in a reflectance, optical degradation, high sensitivity recording and an error generating rate to a laser beam having a certain wavelength, and they are not optical recording media which are usable for recording and reproducing with plural kinds of laser beams.

Further, it is proposed in Japanese Patent Application Laid-Open No. 61-74149 (1986) to increase a recording capacity by providing a difference in a depth direction of pits by means of laminating organic dyes having different absorbing wavelengths. However, this also is not an optical recording medium which is usable for recording and reproducing with plural kinds of laser beams.

On the other hand, media using metal complexes of azo compounds in recording layers are disclosed in Japanese Patent Application Laid-Open No. 62-30090 (1987), Japanese Patent Application Laid-Open No. 63-9577 (1988), Japanese Patent Application Laid-Open No. 63-9578, Japanese Patent Application Laid-Open No. 63-9579, Japanese Patent Application Laid-Open No. 3-268994 (1991), Japanese Patent Application Laid-Open No. 4-46186 (1992), International Patent Application No. W091/14740, Japanese Patent Application Laid-Open No. 4-308791 (1992), International Patent Application No. W091/18057, International Patent Application No. W091/18950, Japanese Patent Application Laid-Open No. 4-361088 (1992), Japanese Patent Application Laid-Open No. 5-279580 (1993), and Japanese Patent Application Laid-Open No. 6-65514 (1994). However, the media proposed in these publications can not satisfy the orange book and can not be reproduced or recorded and reproduced with beams of 620 to 690 nm.

## SUMMARY OF THE INVENTION

An object of the present invention is to solve the problems described above, that is, to provide an optical recording medium which can be recorded/reproduced or reproduced with light beam having a wavelength selected from wavelengths of 620 to 690 nm and which can be recorded/reproduced or reproduced based on the CD standards as well with light beam having a wavelength selected from conventional wavelengths of 770 to 830 nm and has good recording characteristics.

Intensive investigations made by the present inventors in order to solve the problems described above have resulted in completing the present invention. That is, the present invention relates to:

(1) an optical recording medium comprising at least a dye layer, a reflective layer and a protective layer provided on a substrate, wherein an azo compound represented by the following Formula (1) or a metal complex thereof having an absorption maximum at a wavelength falling in a range of 450 to 630 nm and a phthalocyanine compound represented by the following Formula (2) having an absorption maximum at a wavelength falling in a range of 680 to 900 nm are contained in said dye layer:

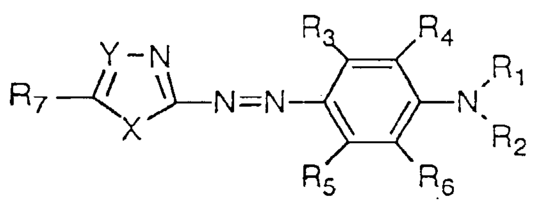

(1)

wherein $R_1$ and $R_2$ represent independently a hydrogen atom, a substituted or unsubstituted alkyl group, a substituted or unsubstituted aryl group, a substituted or unsubstituted aralkyl group, or a substituted or unsubstituted alkenyl group; $R_3$, $R_4$, $R_5$ and $R_6$ represent independently a hydrogen atom, a halogen atom, a hydroxyl group, a carboxyl group, a sulfonic acid group, a sulfonamide group, an amino group, a substituted or unsubstituted alkyl group, a substituted or unsubstituted alkoxyl group, a substituted or unsubstituted aryl group, a substituted or unsubstituted acyl group, a substituted or unsubstituted alkylcarboxyl group, a substituted or unsubstituted aralkyl group, a substituted or unsubstituted alkylcarbonylamino group, a substituted or unsubstituted alkylsulfoamino group, a substituted or unsubstituted alkylamino group, a substituted or unsubstituted alkylsulfonyl group, or a substituted or unsubstituted alkenyl group; $R_1$ and $R_4$, $R_2$ and $R_6$, and $R_1$ and $R_2$ may form rings via linkage groups; $R_7$ represents a hydrogen atom, a halogen atom, a hydroxyl group, a carboxyl group, a sulfonic acid group, a sulfonamide group, an amino group, a substituted or unsubstituted alkyl group, a substituted or unsubstituted alkoxyl group, a substituted or unsubstituted aryl group, a substituted or unsubstituted acyl group, a substituted or unsubstituted alkylcarboxyl group, a substituted or unsubstituted aralkyl group, a substituted or unsubstituted alkylcarbonylamino group, a substituted or unsubstituted alkylsulfoamino group, a substituted or unsubstituted alkylamino group, a substituted or unsubstituted alkylsulfonyl group, a substituted or unsubstituted alkenyl group, a cyano group, a nitro group, a mercapto group, a thiocyano group, a chlorosulfonic acid group, a substituted or

unsubstituted alkylthio group, a substituted or unsubstituted alkylazomethine group, or a substituted or unsubstituted alkylaminosulfonyl group; X represents a sulfur atom, or N-$R_8$ (wherein $R_8$ represents a hydrogen atom, a substituted or unsubstituted alkyl group, a substituted or unsubstituted aryl group, a substituted or unsubstituted aralkyl group, or a substituted or unsubstituted alkenyl group); Y represents a nitrogen atom or C-$R_9$ (wherein $R_9$ is synonymous with those described in $R_7$); provided that when X is a sulfur atom, Y is a nitrogen atom, and when X is N-$R_8$, Y is C-$R_9$:

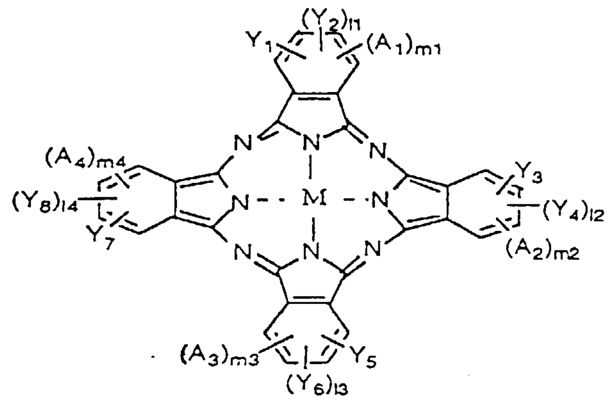

(2)

wherein $Y_1$, $Y_2$, $Y_3$, $Y_4$, $Y_5$, $Y_6$, $Y_7$, and $Y_8$ represent independently a hydrogen atom, a substituted or unsubstituted hydrocarbon group having 1 to 20 carbon atoms, a substituted or unsubstituted alkoxyl group having 1 to 20 carbon atoms, or a substituted or unsubstituted alkylthio group having 1 to 20 carbon atoms; in the respective combinations of $Y_1$ and $Y_2$, $Y_3$ and $Y_4$, $Y_5$ and $Y_6$ and $Y_7$ and $Y_8$, they may be combined to form rings when they are adjacent to each other; $A_1$, $A_2$, $A_3$ and $A_4$ represent independently a halogen atom or a nitro group; $l_1$, $l_2$, $l_3$ and $l_4$ represent an integer of 0 to 3; $m_1$, $m_2$, $m_3$ and $m_4$ represent an integer of 0 to 3; and M represent two hydrogen atoms, a divalent metal atom, a trivalent or tetravalent substituted metal atom, or an oxy metal;

(2) an optical recording medium as described in (1), wherein the compound contained in the dye layer and having an absorption maximum at a wavelength falling in a range of 450 to 630 nm is a metal complex of an azo compound represented by the following Formula (3):

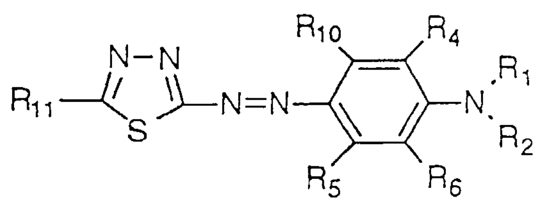

(3)

wherein $R_1$, $R_2$, $R_4$, $R_5$, and $R_6$ are synonymous with those described in Formula (1); $R_{10}$ represents a hydroxyl group or a carboxyl group; and $R_{11}$ represents a hydrogen atom or a halogen atom;

(3) an optical recording medium as described in (1), wherein the dye layer comprises a single layer structure containing a mixture of the azo compound represented by Formula (1) or the metal complex thereof having an absorption maximum at a wavelength falling in a range of 450 to 630 nm and the phthalocyanine compound represented by Formula (2) having an absorption maximum at a wavelength falling in a range of 680 to 900 nm;

(4) an optical recording medium as described in (1), wherein the dye layer comprises a two-layer structure of an optical interference layer containing the azo compound represented by Formula (1) or the metal complex thereof having an absorption maximum at a wavelength falling in a range of 450 to 630 nm and a recording layer containing the phthalocyanine compound represented by Formula (2) having an absorption maximum at a wavelength falling in a range of 680 to 900 nm;

(5) an optical recording medium as described in (4), wherein an equation of $70 \leq ni \times di \leq 300$ applies to light beam having a wavelength used for recording and reproducing, wherein ni represents a real part of a complex refractive index and di represents a layer thickness in the optical interference layer;

(6) an optical recording medium as described in any of (1) to (5), capable of recording and/or reproducing with a laser beam having a wavelength $\lambda_1$ selected from wavelengths falling in a range of 770 to 830 and capable of

recording and/or reproducing as well with a laser beam having a wavelength $\lambda_2$ selected from wavelengths falling in a range of 620 to 690;

(7) an optical recording medium as described in (6), capable of reproducing with a laser beam having the wavelength $\lambda_2$;

(8) an optical recording medium as described in (6) or (7), wherein the laser beam having the wavelength $\lambda_1$ has a reflectance of 65 % or more, and the laser beam having the wavelength $\lambda_2$ has a reflectance of 15 % or more, which are measured through the substrate;

(9) an optical recording medium as described in (8), wherein the laser beam having the wavelength $\lambda_2$ has a reflectance of 20 % or more which is measured through the substrate; and

(10) a metal complex of an azo compound represented by Formula (4).

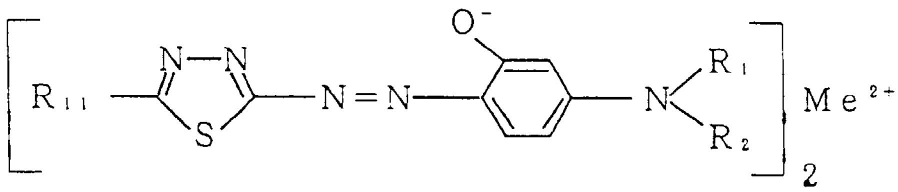

(4)

wherein $R_1$ and $R_2$ represent independently a hydrogen atom, a substituted or unsubstituted alkyl group having 1 to 15 carbon atoms, a substituted or unsubstituted aryl group having 6 to 21 carbon atoms, a substituted or unsubstituted aralkyl group having 7 to 22 carbon atoms, or a substituted or unsubstituted alkenyl group 2 to 16 carbon atoms;

$R_{11}$ represents a hydrogen atom or a halogen atom;

Me represents nickel, cobalt, copper, palladium, iron and zinc.

BRIEF DESCRIPTION OF THE DRAWING

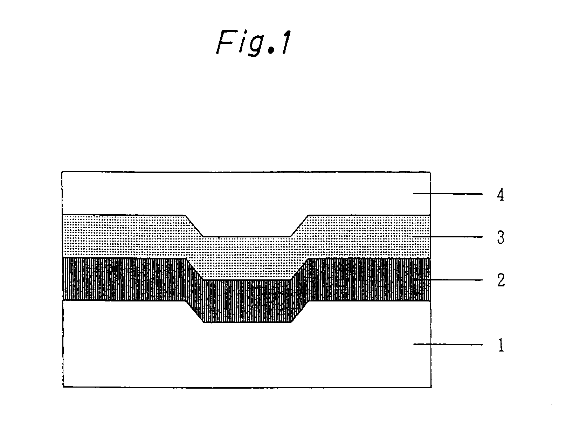

Fig. 1 is a cross-sectional structural view of the optical recording medium, wherein;

1. substrate,
2. dye layer,
3. reflective layer,
4. protective layer.

DETAILED DESCRIPTION OF THE PREFERRED EMBODIMENTS

The present invention shall concretely be explained below.

The optical recording medium of the present invention has a structure in which a dye layer is formed on a substrate and a reflective layer is provided thereon. Further, in order to protect the reflective layer, a protective layer may be provided on the reflective layer, or two sheets of media may be stuck together. However, when the dye layer comprises a two-layer structure of a recording layer and an optical interference layer, a laminating order of the recording layer and the optical interference layer may be reversed, and other layers may be present between the substrate and the dye layer or the optical interference layer or between the recording layer or the optical interference layer and the reflective layer.

The materials for the substrate may be any one as long as it transmits rays having wavelengths for recording and reproducing. Used are, for example, polymer such as polycarbonate resins, vinyl chloride resins, acrylic resins such as polymethylmethacrylate, polystyrene resins and epoxy resins and inorganic materials such as glass. These materials for the substrate are molded into discoid substrates by injection molding. If necessary, guide grooves and pits for showing recording positions are formed on the surface of the substrate in some cases. Such guide grooves and pits are provided preferably in molding the substrate. They can be provided as well by forming a UV-cured resin layer on the substrate. Usually, when the optical recording medium is used for CD, it is a disc having a thickness of about 1.2 mm and a diameter of about 80 to 120 mm, and it has a hole having a diameter of about 15 mm in the center thereof.

In the present invention, the dye layer is provided on the substrate, and the dye layer of the present invention contains a compound represented by Formula (1) or a metal complex thereof having a maximum absorption wavelength ($\lambda$max) falling in a range of less than 630 nm. Above all, preferred is the compound having a large refractive index and

a small absorbance at wavelengths of 620 to 830 nm. When the dye layer comprises a two-layer structure of the recording layer and the optical interference layer, an attenuation coefficient at $\lambda_1$ in the optical interference layer containing a metal complex of the azo compound as a main component is preferably 0.15 or less, and an attenuation coefficient at $\lambda_2$ is preferably 0.2 or less.

The azo compound or the metal complex thereof used in the present invention is the azo compound represented by Formula (1) described above or the metal complex thereof. In the substituents in Formula (1) described above, a halogen atom includes fluorine, chlorine, bromine and iodine, preferably fluorine, chlorine and bromine.

The number of carbon atoms indicated in the patent claims for the individual meanings of the various symbols there defined corresponds to the total number of carbon atoms including that of possible substituents.

Whenever appearing in the definition of each one of the individual symbols directed to formulas (1) to (4) the below-mentioned groups can comprise the following meanings.

An alkyl group is an unsubstitued or substitued alkyl group having 1 to 15 carbon atoms in total. The unsubstituted alkyl group includes a linear, branched or cyclic alkyl group. A substituent of the substituted alkyl group includes a halogen atom, an alkoxyl group, an alkoxyalkoxy group, an alkoxyalkoxyalkoxy group, an alkoxycarbonyl group, an alkoxycarbonyloxy group, an alkoxyalkoxycarbonyloxy group, a hydroxyl group, a hydroxyalkoxy group, a hydroxyalkoxyalkoxy group, a cyano group, an acyloxy group, an acyloxyalkoxy group, an acyloxyalkoxyalkoxy group, a sulfonic acid group, an alkylcarbonylamino group, an alkylsulfoamino group, a sulfonamide group, an alkylamino group, an amino group and an alkylsulfonyl group.

The above substituents are also the possible substituents of the other listed groups different from an alkyl group, whenever they are substituted.

A linear or branched alkyl group is an alkyl group having 1 to 15 carbon atoms and includes, considering processability by coating on polycarbonate, acryl, epoxy or polyolefin substrates, methyl, ethyl, n-propyl, isopropyl, n-butyl, sec-butyl, t-butyl, n-pentyl, isopentyl, 2-methylbutyl, 1-methylbutyl, neopentyl, 1,2-dimethylpropyl, 1,1-dimethylpropyl, cyclopentyl, n-hexyl, 4-methylpentyl, 3-methylpentyl, 2-methylpentyl, 1-methylpentyl, 3,3-dimethylbutyl, 2,3-dimethylbutyl, 1,3-dimethylbutyl, 2,2-dimethylbutyl, 1,2-dimethylbutyl, 1,1-dimethylbutyl, 3-ethylbutyl, 2-ethylbutyl, 1-ethylbutyl, 1,2,2-trimethylbutyl, 1,1,2-trimethylbutyl, 1-ethyl-2-methylpropyl, cyclohexyl, n-heptyl, 2-methylhexyl, 3-methylhexyl, 4-methylhexyl, 5-methylhexyl, 2,4-dimethylpentyl, n-octyl, 2-ethylhexyl, 2,5-dimethyl-hexyl, 2,5,5-trimethylpentyl, 2,4-dimethylhexyl, 2,2,4-trimethylpentyl, n-nonyl, n-decyl, 4-ethyloctyl, 4-ethyl-4,5-dimethylhexyl, n-undecyl, n-dodecyl, 1,3,5,7-tetraethyloctyl, 4-butyloctyl, 6,6-diethyloctyl, n-tridecyl, 6-methyl-4-butyloctyl, n-tetradecyl, n-pentadecyl, 3,5-dimethylheptyl, 2,6-dimethylheptyl, 2,4-dimethylheptyl, 2,2,5,5-tetramethylhexyl, 1-cyclo-pentyl-2,2-dimethylpropyl and 1-cyclohexyl-2,2-dimethylpropyl.

An alkoxyalkyl group includes groups having 2 to 15 carbon atoms, such as methoxymethyl, ethoxymethyl, propoxymethyl, butoxymethyl, methoxyethyl, ethoxyethyl, propoxyethyl, butoxyethyl, n-hexyloxyethyl, 4-methylpentyloxyethyl, 1,3-dimethylbutoxyethyl, 2-ethylhexyloxyethyl, n-octyloxyethyl, 3,5,5-trimethylhexyloxyethyl, 2-methyl-1-isopropylpropoxyethyl, 3-methyl-1-isopropylbutoxyethyl, 2-ethoxy-l-methylethyl, 3-methoxybutyl, 3,3,3-trifluoropropoxyethyl and 3,3,3-trichloropropoxyethyl.

The examples of an alkoxyalkoxyalkyl group include -methoxyethoxyethyl, ethoxyethoxyethyl, propoxyethoxyethyl, butoxyethoxyethyl, hexyloxyethoxyethyl, 1,2-dimethylpropoxyethoxyethyl, 3-methyl-1-isobutylbutoxyethoxyethyl, 2-methoxy-1-methylethoxyethyl, 2-butoxy-1-methylethoxyethyl, 2-(2'-ethoxy-1'-methylethoxy)-1-methylethyl, 3,3,3-trifluoropropoxyethoxyethyl and 3,3,3-trichloropropoxyethoxyethyl.

The examples of an alkoxyalkoxyalkoxyalkyl group include methoxyethoxyethoxyethyl, ethoxyethoxyethoxyethyl, butoxyethoxyethoxyethyl, 2,2,2-trifluoroethoxyethoxyethoxyethyl and 2,2,2-trichloroethoxyethoxyethoxyethyl.

The examples of an alkoxycarbonylalkyl group include methoxycarbonylmethyl, ethoxycarbonylmethyl, butoxycarbonylmethyl, methoxycarbonyethyl, ethoxycarbonylethyl, butoxycarbonylethyl, 2,2,3,3-tetrafluoropropoxycarbonylmethyl and 2,2,3,3-tetrachloropropoxycarbonylmethyl.

The examples of an alkoxycarbonyloxyalkyl group include methoxycarbonyloxyethyl, ethoxycarbonyloxyethyl, butoxycarbonyloxyethyl, 2,2,2-trifluoroethoxycarbonyloxyethyl and 2,2,2-trichloroethoxycarbonyloxyethyl.

The examples of an alkoxyalkoxycarbonyloxyalkyl group includes methoxyethoxycarbonyloxyethyl, ethoxyethoxycarbonyloxyethyl, butoxyethoxycarbonyloxyethyl, 2,2,2-trifluoroethoxyethoxycarbonyloxyethyl and 2,2,2-trichloroethoxyethoxycarbonyloxyethyl.

The examples of a hydroxyalkyl group include 2-hydroxyethyl, 4-hydroxybutyl, 2-hydroxy-3-methoxypropyl, 2-hydroxy-3-chloropropyl, 2-hydroxy-3-ethoxypropyl, 3-butoxy-2-hydroxypropyl, 2-hydroxy-3-phenoxypropyl, 2-hydroxypropyl and 2-hydroxybutyl.

The examples of a hydroxyalkoxyalkyl group include hydroxyethoxyethyl, 2-(2'-hydroxy-1'-methylethoxy)-1-methylethyl, 2-(3'-fluoro-2'-hydroxypropoxy)ethyl and 2-(3'-chloro-2'-hydroxypropoxy)ethyl.

The examples of a hydroxyalkoxyalkoxyalkyl group include hydroxyethoxyethoxyethyl, [2'-(2"-hydroxy-1"-methylethoxy)-1'-methylethoxy]ethoxyethyl, [2'-( 2"-fluoro-1"-hydroxyethoxy)-1'-methylethoxy]ethoxyethyl and [2'-(2"-chloro-1"-hydroxyethoxy)-1'-methylethoxy]ethoxyethyl.

The examples of a cyanoalkyl group include 2-cyanoethyl, 2-cyanopropyl, 2-cyanobutyl, 4-cyanobutyl, 2-cyano-3-methoxypropyl, 2-cyano-3-chloropropyl, 2-cyano-3-ethoxypropyl, 3-butoxy-2-cyanopropyl and 2-cyano-3-phenoxypropyl.

The examples of an acyloxyalkyl group include acetoxyethyl, propionyloxyethyl, butyryloxyethyl, valeryloxyethyl, 1-ethylpentylcarbonyloxyethyl, 2,4,4-trimethylpentylcarbonyloxyethyl, 3-fluoro-butyryloxyethyl and 3-chlorobutyryloxyethyl.

The examples of an acyloxyalkoxyalkyl group include acetoxyethoxyethyl, propionyloxyethoxyethyl, valeryloxyethoxyethyl, 1-ethylpentylcarbonyloxyethoxyethyl, 2,4,4-trimethylpentylcarbonyloxyethoxyethyl, 2-fluoroprpionyloxyethoxyethyl and 2-chloropropionyloxyethoxyethyl.

The examples of an acyloxyalkoxyalkoxyalkyl group include acetoxyethoxyethoxyethyl, propionyloxyethoxyethoxyethyl,valeryloxyethoxyethoxyethyl, 1-ethylpentylcarbonyloxyethoxyethoxyethyl, 2,4,4-trimethylpentylcarbonyloxyethoxyethoxyethyl, 2-fluoropropionyloxyethoxyethoxyethyl and 2-chloropropionyloxyethoxyethoxyethyl.

The examples of a halogenated alkyl group include chloromethyl, chloroethyl, 2,2,2-trifluoroethyl, trifluoromethyl, bromomethyl and iodomethyl.

The examples of a sulfonalkyl group include sulfonmethyl, sulfonethyl and sulfonpropyl.

The examples of an alkylcarbonylaminoalkyl group include methylcarbonylaminoethyl, ethylcarbonylaminoethyl, propylcarbonylaminoethyl, cyclohexylcarbonylaminoethyl and succiniminoethyl.

The examples of an alkylsulfoaminoalkyl group include methylsulfoaminoethyl, ethylsulfoaminoethyl and propylsulfoaminoethyl.

The examples of a sulfonamidealkyl group include sulfonamidemethyl, sulfonamidethyl and sulfonamidepropyl.

The examples of an alkylaminoalkyl group include N-methylaminomethyl, N,N-dimethylaminomethyl, N,N-diethylaminomethyl, N,N-dipropylaminomethyl and N,N-dibutylaminomethyl.

The examples of an aminoalkyl group include aminomethyl, aminoethyl and aminopropyl.

The examples of an alkylsulfonalkyl group include methylsulfonmethyl, ethylsulfonmethyl, butylsulfonmethyl, methylsulfonethyl, ethylsulfonethyl, butylsulfonethyl, 2,2,3,3-tetrafluoropropylsulfonmethyl and 2,2,3,3-tetrachloropropylsulfonmethyl.

The examples of a substituted or unsubstituted alkoxyl group are alkoxyl groups having the same substituents as the alkyl groups given above have, and include preferably lower alkoxyl groups such as methoxy, ethoxy, n-propoxy, isopropoxy, n-butoxy, isobutoxy, sec-butoxy, t-butoxy, n-pentyloxy, isopentyloxy, neopentyloxy and 2-methylbutoxy.

The examples of a substituted or unsubstituted aryl group are aryl groups having the same substituents as the alkyl groups given above have, and include preferably phenyl, nitrophenyl, cyanophenyl, hydroxyphenyl, methylphenyl, trifluoromethylphenyl, naphthyl, nitronaphthyl, cyanonaphthyl, hydroxynaphthyl, methylnaphthyl and trifluoromethylnaphthyl.

The examples of a substituted or unsubstituted acyl group are acyl groups having the same substituents as the alkyl groups given above have, and include preferably formyl, acetyl, ethylcarbonyl, n-propylcarbonyl, isopropylcarbonyl, n-butylcarbonyl, isobutylcarbonyl, sec-butylcarbonyl, t-butylcarbonyl, n-pentylcarbonyl, isopentylcarbonyl, neopentylcarbonyl, 2-methylbutylcarbonyl and nitrobenzylcarbonyl.

The examples of a substituted or unsubstituted alkylcarboxyl group are alkylcarboxyl groups having the same substituents as the alkyl groups given above have, and include preferably lower alkylcarboxyl groups such as methylcarboxyl, ethylcarboxyl, n-propylcarboxyl, isopropylcarboxyl, n-butylcarboxyl, isobutylcarboxyl, sec-butylcarboxyl, t-butylcarboxyl, n-pentylcarboxyl, isopentylcarboxyl, neopentylcarboxyl and 2-methylbutylcarboxyl.

The examples of a substituted or unsubstituted aralkyl group are aralkyl groups having the same substituents as the alkyl groups given above have, and include preferably benzyl, nitrobenzyl, cyanobenzyl, hydroxybenzyl, methylbenzyl, trifluoromethylbenzyl, naphthylmethyl, nitronaphthylmethyl, cyanonaphthylmethyl, hydroxynaphthylmethyl, methylnaphthylmethyl and trifluoromethylnaphthylmethyl.

The examples of a substituted or unsubstituted alkylcarbonylamino group are alkylcarbonylamino groups having the same substituents as the alkyl groups given above have, and include preferably lower alkylcarbonylamino groups such as acetylamino, ethylcarbonylamino, n-propylcarbonylamino, isopropylcarbonylamino, n-butylcarbonylamino, isobutylcarbonylamino, sec-butylcarbonylamino, t-butylcarbonylamino, n-pentylcarbonylamino, isopentylcarbonylamino, neopentylcarbonylamino, 2-methylbutylcarbonylamino, cyclohexylcarbonylamino and succinimino.

The examples of a substituted or unsubstituted alkylsulfoamino group are alkylsulfoamino groups having the same substituents as the alkyl groups given above have, and include preferably lower alkylsulfoamino groups such as methylsulfoamino, ethylsulfoamino, n-propylsulfoamino, isopropylsulfoamino, n-butylsulfoamino, isobutylsulfoamino, sec-butylsulfoamino, t-butylsulfoamino, n-pentylsulfoamino, isopentylsulfoamino, neopentylsulfoamino, 2-methylbutylsulfoamino and cyclohexylsulfoamino.

The examples of a substituted or unsubstituted alkylamino group are alkylamino groups having the same substituents as the alkyl groups given above have, and include preferably lower alkylamino groups such as N-methylamino, N,N-dimethylamino, N,N-diethylamino, N,N-dipropylamino and N,N-dibutylamino.

The examples of a substituted or unsubstituted alkylsulfonyl group are alkylsulfonyl groups having the same substituents as the alkyl groups given above have, and include preferably lower alkylsulfonyl groups such as methylsulfonyl, ethylsulfonyl, n-propylsulfonyl, isopropylsulfonyl, n-butylsulfonyl, isobutylsulfonyl, sec-butylsulfonyl, t-butylsulfonyl, n-pentylsulfonyl, isopentylsulfonyl, neopentylsulfonyl, 2-methylbutylsulfonyl, 2-hydroxyethylsulfonyl and 2-cyanoethylsulfonyl.

The examples of a substituted or unsubstituted alkenyl group are alkenyl groups having the same substituents as the alkenyl groups given above have, and include preferably lower alkenyl groups such as propenyl, 1-butenyl, isobutenyl, 1-pentenyl, 2-pentenyl, 2-methyl-1-butenyl, 3-methyl-1-butenyl, 2-methyl-2-butenyl, 2,2-dicyanovinyl, 2-cyano-2-methylcarboxylvinyl and 2-cyano-2-methylsulfonvinyl.

The examples of a substituted or unsubstituted alkylthio group are alkylthio groups having the same substituents as the alkyl groups given above have, and include preferably lower alkylthio groups such as methylthio, ethylthio, n-propylthio, isopropylthio, n-butylthio, isobutylthio, sec-butylthio, t-butylthio, n-pentylsthio, isopentylthio, neopentylthio, 2-methylbutylthio and methylcarboxylethylthio.

The examples of a substituted or unsubstituted alkylazomethine group are alkylazomethine groups having the same substituents as the alkyl groups given above have, and include preferably lower alkylazomethine groups such as methylazomethine, ethylazomethine, n-propylazomethine, isopropylazomethine, n-butylazomethine, isobutylazomethine, sec-butylazomethine, t-butylazomethine, n-pentylazomethine, isopentylazomethine, neopentylazomethine, 2-methylbutylazomethine and hydroxyethylazomethine.

The examples of a substituted or unsubstituted alkylaminosulfonyl group are alkylaminosulfonyl groups having the same substituents as the alkyl groups given above have, and include preferably lower alkylaminosulfonyl groups such as N-methylaminosulfonyl, N-ethylaminosulfonyl, N-(n-propyl)aminosulfonyl, N-(isopropyl)aminosulfonyl, N-(n-butyl)aminosulfonyl, N-(isobutyl)aminosulfonyl, N-(secbutyl)aminosulfonyl, N-(t-butyl)aminosulfonyl, N-(n-pentyl)aminosulfonyl, N-(isopentyl)aminosulfonyl, N-(neopentyl)aminosulfonyl, N-(2-methylbutyl)aminosulfonyl, N-(2-hydroxyethyl)aminosulfonyl and N-(2-cyanoethyl)aminosulfonyl.

The examples of the rings formed by combining $R_1$ with $R_4$ and $R_2$ with $R_6$ via linkage groups include $-CH_2CH_2-$, $-CH_2CH_2CH_2-$, $-CH_2CH(Cl)-$, $-CH_2C(=O)CH_2-$, $-CH_2C(=O)-$, $-CH_2CH_2C(=O)-$, $-CH_2CH(F)-$ and $-CH_2CH(OH)-$.

The examples of the rings formed by combining $R_1$ with $R_2$ via a linkage group include $-CH_2CH_2OCH_2CH_2-$, $-CH_2CH_2NHCH_2CH_2-$, $-CH_2CH_2N(CH_3)CH_2CH_2-$, $-CH_2C(=O)OC(=O)CH_2-$, $-CH_2C(=O)NHC(=O)CH_2-$, $-CH_2C(=O)N(CH_3)C(=O)CH_2-$ and $-CH_2CH_2CH_2CH_2CH_2-$.

The compound of the present invention represented by Formula (1) can be produced in the following manner by known methods. That is, an amine component represented by the following Formula (4) is turned into an azo component, which is added to a solution of a coupling component represented by the following Formula (5) to carry out a coupling reaction, whereby the azo compound represented by Formula (1) is obtained:

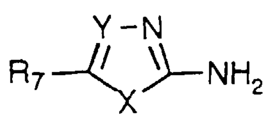

(4)

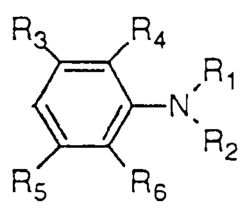

(5)

wherein $R_1$ to $R_7$, X and Y are synonymous with those described in Formula (1).

In the present invention, the metal complex of the azo compound described above can be produced by known methods, for example, a method described in Furukawa, Analytica Chimica Acta 140 (1982), 281 to 289. Preferred as a metal for forming the metal complex of the azo compound are, for example, metals such as nickel, cobalt, iron, ruthenium, rhodium, palladium, copper, osmium, iridium, platinum, zinc and magnesium, and more preferred are nickel, cobalt, copper, palladium, iron and zinc. They are used in the forms of acetates, halides and $BF_4^-$ salts to form complexes in which the metals are coordinated to the azo compounds in the forms of $Ni^{2+}$, $Co^{2+}$, $Co^{3+}$, $Cu^{2+}$, $Pd^{2+}$, $Fe^{2+}$, $Fe^{3+}$

and $Zn^{2+}$. The metal complexes of the azo compounds may be used alone or in a mixture of the plural compounds.

The examples of the azo compound of the present invention represented by Formula (1) and the metal complex thereof are shown in Table 1.

Table 1

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-1 | $CH_2CH_2OH$ | $CH_2CH_2OH$ | H | $OCH_3$ | H | H | $CH_3$ | $N-CH_2CH_3$ | C-CN | - |
| 1-2 | $CH_2CH_2COOCH_3$ | $CH_2CH_2COOCH_3$ | H | H | H | H | $CH_3$ | $N-CH_2-$ 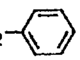 | C-CN | - |
| 1-3 | $CH_2CH_2CH_2CH_3$ | $CH_2CH_2CH_2CH_3$ | H | H | H | H | H | $N-CH_2CH_3$ | $C-SCH_3$ | - |
| 1-4 | $CH_3COOCH_2CF_2CHF_2$ | $CH_3COOCH_2CF_2CHF_2$ | H | H | H | H | $CH_3$ | $N-CH_3$ | C-CN | - |
| 1-5 | $CH_2CH_3$ | $CH_2CH_3$ | H | H | OH | H | $CH_3$ | $N-CH_3$ | C-CN | - |
| 1-6 | $CH_2CH_3$ | $CH_2CH_2-$ 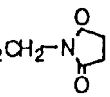 | H | H | OH | H | CN | $N-CH_3$ | CH | - |
| 1-7 | $CH_2CH_3$ | $CH_2CH_2NHCOCH_3$ | H | H | OH | H | $CH_3$ | NH | C-CN | - |
| 1-8 | $CH_2CH_2CH_2CH_3$ | $CH_2CH_2OCOCHCH_3$ | H | H | OH | H | H | 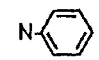 | $C-COOCH_3$ | - |
| 1-9 | $CH_2CH_2CH_2CH_3$ | $CH_2CH_2CH_2CH_3$ | H | $OCH_2CH_3$ | OH | H | H | $N-CH=CHCH_3$ | $C-COOCH_3$ | - |
| 1-10 | $CH_2CH_3$ | $CH_2CH_3$ | H | H | $NHCOCH_3$ | H | OH | $N-CH_2CH_3$ | C-CN | - |
| 1-11 | $CH_2CH_2CH_2CH_3$ | $CH_2CH_2CH_2CH_3$ | H | H | $NHCOCH_3$ | H | $CH_3$ | NH | $C-COOCH_2CH_3$ | - |
| 1-12 | $CH_2$ 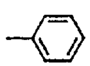 | $CH_2$ 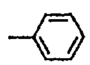 | H | H | $NHCOCH_3$ | H | $CH_3$ | $N-CH_3$ | $C-CONH_2$ | - |
| 1-13 | $CH_2CH_2OCH_2CH(CH_3)_2$ | $CH_2CH_2OCH_2CH(CH_3)_2$ | H | H | $NHCOCH_3$ | H | H | $N-CH_3$ | C-COOH | - |
| 1-14 | $CH_2CH_2CH_2CH_3$ | $CH_2CH_2CH_2CH_3$ | H | H | $NHCOCH_3$ | H | $CH_3$ | 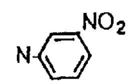 | C-CO- 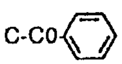 | - |
| 1-15 | $CH_2CH_3$ | $CH_2CH_2CN$ | H | $OCH_3$ | $NHCOCH_3$ | H | $CH_3$ | NH | $C-SO_2-$ 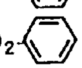 | - |
| 1-16 | $CH_2CH_2CH_2CH_3$ | $CH_2CH_2CH_2CH_3$ | H | H | NHCO- 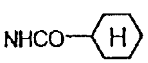 | H | $CH_3$ | NH | $C-NO_2$ | - |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-17 | $CH_3COOCH_2CF_2CHF_2$ | $CH_3COOCH_2CF_2CHF_2$ | H | H | NHCO– 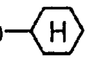 | H | H | $N\text{-}CH_2CH_3$ | C-CN | - |
| 1-18 | $CH_2CH_2CH_2CH_3$ | $CH_2CH_2CH_2CH_3$ | H | H | NHCO– 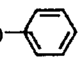 | H | $CH_3$ | N- 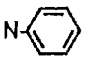 | C-CN | - |
| 1-19 | $CH_2CH_2OH$ | $CH_2CH_2OH$ | H | $OCH_3$ | NHCO– 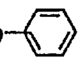 | H | $CH_3$ | $N\text{-}CH_2CH_3$ | C-CN | - |
| 1-20 | $CH_2CH_2CH_2CH_3$ | $CH_2CH_2CH_2CH_3$ | H | H | $NHCOCH_2CH_2Cl$ | H | H | $N\text{-}CH_2$– 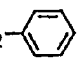 | $C\text{-}COOCH_3$ | - |
| 1-21 | Combined with $R_4$ | Combined with $R_6$ | H | $(CH_2)_3$ | Cl | $(CH_2)_3$ | H | $N\text{-}CH_3$ | $C\text{-}NO_2$ | - |
| 1-22 | Combined with $R_4$ | Combined with $R_6$ | H | $CH_2COCH_2$ | $CH_3$ | $CH_2COCH_2$ | $CH_2CH_3$ | NH | C-CN | - |
| 1-23 | Combined with $R_2$ | $CH_2CH_2OCH_2CH_2$ | H | H | $NHCOCH_3$ | H | $CH_2CH_3$ | NH | $C\text{-}COOCH_3$ | - |
| 1-24 | $CH_2CH_2CH_2CH_3$ | H | H | H | COOH | H | Cl | NH | $C\text{-}SO_3H$ | - |
| 1-25 | $CH_2CH_2CH_2CH_3$ | H | H | H | $SO_3H$ | H | $CH_3$ | NH | $C\text{-}SO_2NH_2$ | - |
| 1-26 | $CH_2CH_2CH_2CH_3$ | 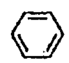 | H | H | $SO_2NH_2$ | H | $CH_3$ | NH | $C\text{-}NH_2$ | - |
| 1-27 | CH=CHCH$_3$ | CH=CHCH$_3$ | H | H | $NH_2$ | H | $CH_3$ | NH | $C\text{-}OCH_3$ | - |
| 1-28 | $CH_2CH_2CH_2CH_3$ | $CH_2CH_2CH_2CH_3$ | H | H | $COOCH_3$ | H | $CH_3$ | NH | C- 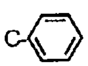 | - |
| 1-29 | $CH_2CH_2CH_2CH_3$ | $CH_2CH_2CH_2CH_3$ | H | H | $NHSO_2CH_3$ | H | $CH_3$ | NH | $CH_2$- 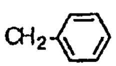 | - |
| 1-30 | $CH_2CH_2CH_2CH_3$ | $CH_2CH_2CH_2CH_3$ | H | H | 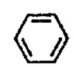 | H | $CH_3$ | NH | $C\text{-}NHCOCH_3$ | - |
| 1-31 | $CH_2CH_2CH_2CH_3$ | $CH_2CH_2CH_2CH_3$ | H | H | CO – 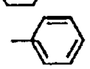 | H | H | NH | $C\text{-}NHSO_2CH_3$ | - |
| 1-32 | $CH_2CH_2CH_2CH_3$ | $CH_2CH_2CH_2CH_3$ | H | H | $CH_2$– 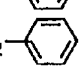 | H | H | NH | $C\text{-}N(CH_3)_2$ | - |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-33 | $CH_2CH_2CH_2CH_3$ | $CH_2CH_2CH_2CH_3$ | H | H | $NH(CH_3)_2$ | H | H | $N\text{-}CH_3$ | $C\text{-}CH{=}CH_3$ | - |
| 1-34 | $CH_2CH_2OH$ | $CH_2CH_2OH$ | H | H | $SO_2CH_3$ | H | H | $N\text{-}CH_3$ | C-SH | - |
| 1-35 | $CH_2CH_2OH$ | $CH_2CH_2OH$ | H | H | $CH{=}CHCH_3$ | H | H | NH | C-SCN | - |
| 1-36 | $CH_2CH_2OH$ | $CH_2CH_2OH$ | H | H | H | H | OH | $N\text{-}CH_3$ | $C\text{-}SO_2Cl$ | - |
| 1-37 | $CH_2CH_2OH$ | $CH_2CH_2OH$ | H | H | H | H | H | NH | $C\text{-}CH{=}NCH_2CH_2OH$ | - |
| 1-38 | $CH_2CH_2OH$ | $CH_2CH_2OH$ | H | H | H | H | H | NH | $C\text{-}SO_2NHCH_3$ | - |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-39 | $CH_2CH_2OH$ | $CH_2CH_2OH$ | H | $OCH_3$ | H | H | $CH_3$ | S | N | - |
| 1-40 | $CH_2CH_2COOCH_3$ | $CH_2CH_2COOCH_3$ | H | H | H | H | $CCl_3$ | S | N | - |
| 1-41 | $CH_2CH_2CH_2CH_3$ | $CH_2CH_2CH_2CH_3$ | H | H | H | H | $CF_3$ | S | N | - |
| 1-42 | $CH_3COOCH_2CF_2CHF_2$ | $CH_3COOCH_2CF_2CHF_2$ | H | H | H | H | H | S | N | - |
| 1-43 | $CH_2CH_3$ | $CH_2CH_3$ | H | H | OH | H | H | S | N | - |
| 1-44 | $CH_2CH_2CH_2CH_3$ | $CH_2CH_2CH_2CH_3$ | H | H | OH | H | H | S | N | - |
| 1-45 | $CH_2CH_3$ | $CH_2CH_2$– 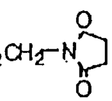 | H | H | OH | H | Br | S | N | - |
| 1-46 | $CH_2CH_3$ | $CH_2CH_2NHCOCH_3$ | H | H | OH | H | $SCH_3$ | S | N | - |
| 1-47 | $CH_2CH_2CH_2CH_3$ | $CH_2CH_2OCOCHCH_3$ | H | H | OH | H | $NO_2$ | S | N | - |
| 1-48 | $CH_2CH_2CH_2CH_3$ | $CH_2CH_2CH_2CH_3$ | H | $OCH_2CH_3$ | OH | H | CN | S | N | - |
| 1-49 | $CH_2CH_3$ | $CH_2CH_3$ | H | H | $NHCOCH_3$ | H | Br | S | N | - |
| 1-50 | $CH_2CH_2OCH_2CH_3$ | $CH_2CH_2OCH_2CH_3$ | H | H | $NHCOCH_3$ | H | Br | S | N | - |
| 1-51 | $CH_2$ 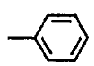 | $CH_2$ 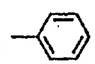 | H | H | $NHCOCH_3$ | H | Br | S | N | - |
| 1-52 | $CH_2CH_2OCH_2CH(CH_3)_2$ | $CH_2CH_2OCH_2CH(CH_3)_2$ | H | H | $NHCOCH_3$ | H | Br | S | N | - |
| 1-53 | $CH_2CH_2CH_2CH_3$ | $CH_2CH_2CH_2CH_3$ | H | H | $NHCOCH_3$ | H | H | S | N | - |
| 1-54 | $CH_2CH_3$ | $CH_2CH_2CN$ | H | $OCH_3$ | $NHCOCH_3$ | H | $SO_2CH_3$ | S | N | - |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-55 | $CH_2CH_2OH$ | $CH_2CH_2OH$ | H | H | NHCO- 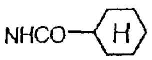 | H | $CF_3$ | S | N | - |
| 1-56 | $CH_2CH_2CH_2CH_3$ | $CH_2CH_2CH_2CH_3$ | H | H | NHCO- 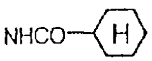 | H | $SCH_2CH_2COOCH_3$ | S | N | - |
| 1-57 | $CH_3COOCH_2CF_2CHF_2$ | $CH_3COOCH_2CF_2CHF_2$ | H | H | NHCO- 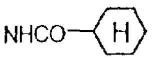 | H | H | S | N | - |
| 1-58 | $CH_2CH_3$ | $CH_2CH_3$ | H | $OCH_3$ | NHCO- 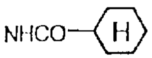 | H | H | S | N | - |
| 1-59 | $CH_2CH_2CH_2CH_3$ | $CH_2CH_2CH_2CH_3$ | H | H | NHCO- 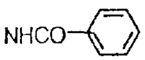 | H | $CH=NCH_2CH_2OH$ | S | N | - |
| 1-60 | $CH_2CH_2OH$ | $CH_2CH_2OH$ | H | $OCH_3$ | NHCO- 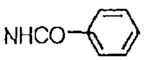 | H | Br | S | N | - |
| 1-61 | $CH_2CH_2CH_2CH_3$ | $CH_2CH_2CH_2CH_3$ | H | H | $NHCOCH_2CH_2Cl$ | H | H | S | N | - |
| 1-62 | Combined with $R_4$ | Combined with $R_6$ | H | $(CH_3)_2$ | Cl | $(CH_2)_3$ | H | S | N | - |
| 1-63 | Combined with $R_4$ | Combined with $R_6$ | H | $CH_2COCH_2$ | $CH_3$ | $CH_2COCH_2$ | H | S | N | - |
| 1-64 | Combined with $R_2$ | $CH_2CH_2OCH_2CH_2$ | H | H | $NHCOCH_3$ | H | Br | S | N | - |
| 1-65 | $CH_2CH_2CH_2CH_3$ | $CH_2CH_2CH_2CH_3$ | H | H | OH | H | Br | S | N | - |
| 1-66 | $CH_2CH_2CH_2CH_3$ | $CH_2CH_2CH_2CH_3$ | H | H | OH | H | $CF_3$ | S | N | - |
| 1-67 | $CH_2CH_3$ | $CH_2CH_3$ | H | H | OH | H | $N(CH(CH_3)_2)_2$ | S | N | - |
| 1-68 | $CH_2CH_2OH$ | $CH_2CH_2OH$ | H | H | NHCO- 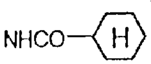 | H | H | S | N | - |
| 1-69 | $CH_2CH_3$ | $CH_2CH_3$ | H | $OCH_3$ | $NHCOCH_3$ | H | H | S | N | - |
| 1-70 | $CH_2CH_2CH_2CH_3$ | $CH_2CH_2CH_2CH_3$ | H | H | COOH | H | H | S | N | - |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-71 | $CH_2CH_2CH_2CH_3$ | H | H | H | COOH | H | OH | S | N | - |
| 1-72 | $CH_2CH_2CH_2CH_3$ | 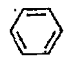 | H | H | $SO_3H$ | H | COOH | S | N | - |
| 1-73 | $CH_2CH_2CH_2CH_3$ | $CH=CHCH_3$ | H | H | $SO_2NH_2$ | H | $SO_3H$ | S | N | - |
| 1-74 | $CH_2CH_2CH_2CH_3$ | $CH_2CH_2CH_2CH_3$ | H | H | $NH_2$ | H | $SO_2NH_2$ | S | N | - |
| 1-75 | $CH_2CH_2CH_2CH_3$ | $CH_2CH_2CH_2CH_3$ | H | H | 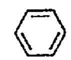 | H | $NH_2$ | S | N | - |
| 1-76 | $CH_2CH_3$ | $CH_2CH_3$ | H | H | CO 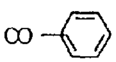 | H | $OCH_3$ | S | N | - |
| 1-77 | $CH_2CH_3$ | $CH_2CH_3$ | H | H | $COOCH_3$ | H | 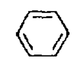 | S | N | - |
| 1-78 | $CH_2CH_3$ | $CH_2CH_3$ | H | H | $CH_2$ 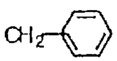 | H | CO 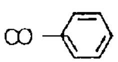 | S | N | - |
| 1-79 | $CH_2CH_3$ | $CH_2CH_3$ | H | H | $NHSO_2CH_3$ | H | $COOCH_3$ | S | N | - |
| 1-80 | $CH_2CH_3$ | $CH_2CH_3$ | H | H | $N(CH_3)_2$ | H | $CH_2$ 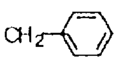 | S | N | - |
| 1-81 | $CH_2CH_2OH$ | $CH_2CH_2OH$ | H | H | $SO_2CH_3$ | H | $NHCOCH_3$ | S | N | - |
| 1-82 | $CH_2CH_2OH$ | $CH_2CH_2OH$ | H | H | $CH=CHCH_3$ | H | $NHSO_2CH_3$ | S | N | - |
| 1-83 | $CH_2CH_2OH$ | $CH_2CH_2OH$ | H | H | NHCO— 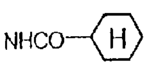 | H | $N(CH_3)_2$ | S | N | - |
| 1-84 | $CH_2CH_2OH$ | H | H | H | NHCO— 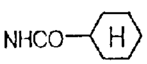 | H | $CH=CHCH_3$ | S | N | - |
| 1-85 | $CH_2CH_3$ | $CH_2CH_3$ | H | H | NHCO— 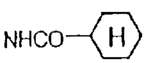 | H | SH | S | N | - |
| 1-86 | $CH_2CH_3$ | $CH_2CH_3$ | H | H | NHCO— 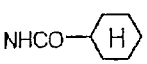 | H | SCN | S | N | - |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-87 | $CH_2CH_3$ | $CH_2CH_3$ | H | H | NHCO— 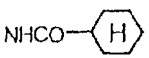 | H | $SO_2Cl$ | S | N | - |
| 1-88 | $CH_2CH_3$ | $CH_2CH_3$ | H | H | NHCO— 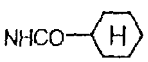 | H | $SO_2NHCH_3$ | S | N | - |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-89 | $CH_2CH_2CH_2CH_3$ | $CH_2CH_2CH_2CH_3$ | OH | H | H | H | $CH_3$ | $N\text{-}CH_2CH_3$ | C-CN | Ni |
| 1-90 | $CH_2CH_2OCH_2CH_3$ | $CH_2CH_2OCH_2CH_3$ | $NHCOCH_3$ | H | H | $OCH_3$ | $CH_3$ | $N\text{-}CH_2$ 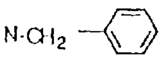 | C-CN | Ni |
| 1-91 | $CH_2$ 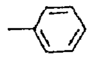 | $CH_2$ 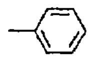 | $NHCOCH_3$ | $SO_3H$ | H | $SO_3H$ | H | $N\text{-}CH_2CH_3$ | $C\text{-}SCH_3$ | Pd |
| 1-92 | $CH_2CH_2OCH_2CH(CH_3)_2$ | $CH_2CH_2OCH_2CH(CH_3)_2$ | $NHCOCH_3$ | H | H | H | $CH_3$ | $N\text{-}CH_3$ | C-CN | Ni |
| 1-93 | $CH_2CH_3$ | $CH_2CH_3$ | OH | H | H | H | $CH_3$ | $N\text{-}CH_3$ | C-CN | Ni |
| 1-94 | $CH_2CH_2CH_2CH_3$ | $CH_2CH_2CH_2CH_3$ | OH | H | H | H | CN | $N\text{-}CH_3$ | CH | Ni |
| 1-95 | $CH_2CH_2CH(CH_3)_2$ | $CH_2CH_2CH(CH_3)_2$ | $NHCOCH_3$ | Cl | H | Cl | $CH_3$ | NH | C-CN | Zn |
| 1-96 | $CH_2CH_2CH_2CH_3$ | $CH_2CH_2CH_2CH_3$ | OH | H | H | H | H | N 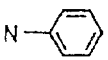 | $C\text{-}COOCH_3$ | Ni |
| 1-97 | $CH_2CH_2CH_2CH_3$ | $CH_2CH_2CH_2CH_3$ | OH | H | H | H | H | $N\text{-}CH{=}CHCH_3$ | $C\text{-}COOCH_3$ | Ni |
| 1-98 | $CH_2CH_2OH$ | $CH_2CH_2OH$ | NHCO 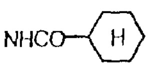 | H | H | OH | OH | $N\text{-}CH_2CH_3$ | C-CN | Pd |
| 1-99 | $CH_2CH_2OCH_2OH$ | $CH_2CH_2OCH_2OH$ | $NHCOCH_3$ | H | H | $NHCOCH_3$ | $CH_3$ | NH | $C\text{-}COOCH_3$ | Zn |
| 1-100 | $CH_2CH_3$ | $CH_2CH_3$ | OH | H | H | H | $CH_3$ | $N\text{-}CH_3$ | $C\text{-}CONH_2$ | Ni |
| 1-101 | $CH_2CH_2NHSO_2CH_3$ | $CH_2CH_2NHSO_2CH_3$ | OH | H | H | H | H | $N\text{-}CH_3$ | C-COOH | Ni |
| 1-102 | $CH_2CH_2CH_2CH_3$ | $CH_2CH_2CH_2CH_3$ | OH | H | H | H | $CH_3$ | N- 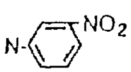 | C-CO 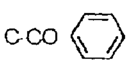 | Ni |
| 1-103 | $CH_2CH_2CH_2CH_3$ | $CH_2CH_2CH_2CH_3$ | OH | H | H | H | $CH_3$ | NH | $C\text{-}SO_2\text{-}$ 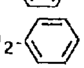 | Ni |
| 1-104 | $CH_2CH_3$ | $CH_2CH_3$ | COOH | H | H | H | $CH_3$ | NH | $C\text{-}NO_2$ | Ni |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-105 | $CH_2OCH_2CH_2OCH_3$ | $CH_2OCH_2CH_2OCH_3$ | COOH | H | H | H | H | $N\text{-}CH_2CH_3$ | C-CN | Ni |
| 1-106 | $CH_2CH_2NHCOCH_3$ | $CH_2CH_2NHCOCH_3$ | COOH | COOH | H | H | $CH_3$ | N- 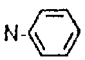 | C-CN | Ni |
| 1-107 | $CH_2CH_2OCH_2CH(CH_3)_2$ | $CH_2CH_2OCH_2CH(CH_3)_2$ | $SO_3H$ | $SO_3H$ | H | $SO_3H$ | $CH_3$ | $N\text{-}CH_2CH_3$ | C-CN | Ni |
| 1-108 | $CH_2CH_3$ | $CH_2CH_3$ | $NHSO_2CH_3$ | $NH_3$ | H | H | H | $N\text{-}CH_2$— 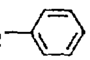 | $C\text{-}COOCH_2CH_3$ | Ni |
| 1-109 | $CH_2CH_2CH_2CH_3$ | $CH_2CH_2CH_2CH_3$ | OH | H | H | $NHSO_2CH_3$ | H | $N\text{-}CH_3$ | $C\text{-}NO_2$ | Ni |
| 1-110 | $CH_2CH_2CH_2CH_3$ | $CH_2CH_2CH_2CH_3$ | OH | H | H | H | $CH_2CH_3$ | NH | C-CN | Ni |
| 1-111 | $CH_2CH_2SO_2CH_3$ | $CH_2CH_2SO_2CH_3$ | OH | $COCH_3$ | H | H | $CH_2CH_3$ | NH | $C\text{-}COCH_3$ | $CO^{3-}$ |
| 1-112 | $CH_2COCH_2CH_3$ | $CH_2COCH_2CH_3$ | OH | $OCH_2CH_3$ | H | H | Cl | NH | $C\text{-}SO_3H$ | Ni |
| 1-113 | $CH_2CH_2OH$ | $CH_2CH_2OH$ | $NHCH_3$ | H | H | $NHCH_3$ | $CH_3$ | NH | $C\text{-}SO_2NH_2$ | Pd |
| 1-114 | $CH_2COOCH_2CF_2CHF_2$ | $CH_2COOCH_2CF_2CHF_2$ | H | $COOCH_2CH_3$ | H | H | $CH_3$ | NH | $C\text{-}NH_2$ | Zn |
| 1-115 | $CH_2CH_2CN$ | $CH_2CH_2CN$ | OH | H | H | $CH_2$- 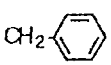 | $CH_3$ | NH | $C\text{-}OCH_3$ | Ni |
| 1-116 | $CH_2CH=CH_2$ | $CH_2CH=CH_2$ | OH | H | H | 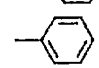 | $CH_3$ | NH | C- 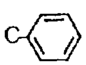 | Zn |
| 1-117 | $CH_2CH_2CH_2CH_3$ | $CH_2CH_2CH_2CH_3$ | OH | H | H | $CH_3$ | $CH_3$ | NH | $C\text{-}CH_2$ 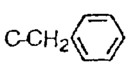 | Zn |
| 1-118 | 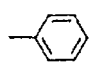 | H | $SO_3H$ | H | H | H | $CH_3$ | NH | $C\text{-}NHCOCH_3$ | Zn |
| 1-119 | $CH_2CH_3$ | $CH_2CH_3$ | $SO_3H$ | H | H | $NHSO_3H$ | H | NH | $C\text{-}NHSO_2CH_3$ | $Co^{3-}$ |
| 1-120 | $CH_2CH_3$ | $CH_2CH_3$ | $SO_3H$ | H | H | $SO_2CH_3$ | H | NH | $C\text{-}N(CH_3)_2$ | Ni |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-121 | Combined with $R_2$ | $CH_2CH_2NHCOCH_3$ | OH | H | H | H | H | $N\text{-}CH_3$ | $C\text{-}CH{=}CHCH_3$ | Ni |
| 1-122 | Combined with $R_4$ | Combined with $R_6$ | OH | $(CH_2)_3$ | H | $(CH_2)_3$ | H | $N\text{-}CH_3$ | C-SH | Ni |
| 1-123 | Combined with $R_4$ | Combined with $R_6$ | OH | $CH_2COCH_2$ | H | $CH_2COCH_2$ | H | NH | C-SCN | Ni |
| 1-124 | $CH_2CH_2OH$ | $CH_2CH_2OH$ | OH | H | H | H | OH | $N\text{-}CH_3$ | $C\text{-}SO_2Cl$ | Ni |
| 1-125 | $CH_2CH_2OH$ | $CH_2CH_2OH$ | COOH | H | H | H | H | NH | $C\text{-}CH{=}NCH_2CH_3$ | Ni |
| 1-126 | $CH_2CH_2CH_2CH_3$ | $CH_2CH_2CH_2CH_3$ | OH | H | H | H | CN | $N\text{-}CH_2$— 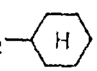 | C-CN | Ni |
| 1-127 | $CH_2CH_3$ | $CH_2CH_3$ | OH | H | H | H | CN | $NCH_2CH_2CH_2CH_3$ | C-CN | Ni |
| 1-128 | $CH_2CH_2CH_2CH_3$ | $CH_2CH_2CH_2CH_3$ | $SO_3H$ | H | H | H | CN | $NCH_2CH_2CH_2CH_3$ | C-CN | Ni |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-129 | $CH_2CH_2CH_2CH_3$ | $CH_2CH_2CH_2CH_3$ | OH | H | H | H | 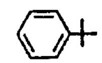 | S | N | Ni |
| 1-130 | $CH_2CH_2OCH_2CH_3$ | $CH_2CH_2OCH_2CH_3$ | $NHCOCH_3$ | H | H | $OCH_3$ | Br | S | N | Ni |
| 1-131 | $CH_2$ — 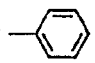 | $CH_2$ — 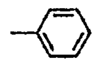 | $NHCOCH_3$ | $SO_3H$ | H | $SO_3H$ | OH | S | N | Pd |
| 1-132 | $CH_2CH_2OCH_2CH(CH_3)_2$ | $CH_2CH_2OCH_2CH(CH_3)_2$ | $NHCOCH_3$ | H | H | H | Br | S | N | Ni |
| 1-133 | $CH_2CH_3$ | $CH_2CH_3$ | OH | H | H | H | H | S | N | Ni |
| 1-134 | $CH_2CH_2CH_2CH_3$ | $CH_2CH_2CH_2CH_3$ | OH | H | H | H | H | S | N | Ni |
| 1-135 | $CH_2CH_2CH(CH_3)_2$ | $CH_2CH_2CH(CH_3)_2$ | $NHCOCH_3$ | Cl | H | Cl | H | S | N | Zn |
| 1-136 | $CH_2CH_2CH_2CH_3$ | $CH_2CH_2CH_2CH_3$ | OH | H | H | H | 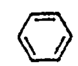 | S | N | Ni |
| 1-137 | $CH_2CH_2CH_2CH_3$ | $CH_2CH_2CH_2CH_3$ | OH | H | H | H | Br | S | N | Ni |
| 1-138 | $CH_2CH_2OH$ | $CH_2CH_2OH$ | NHCO— 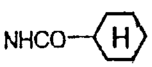 | H | H | OH | $OCH_3$ | S | N | Pd |
| 1-139 | $CH_2CH_2OCH_2OH$ | $CH_2CH_2OCH_2OH$ | $NHCOCH_3$ | H | H | $NHCOCH_3$ | H | S | N | Zn |
| 1-140 | $CH_2CH_3$ | $CH_2CH_3$ | OH | H | H | H | $CH_2CH_3$ | S | N | Ni |
| 1-141 | $CH_2CH_2NHSO_2CH_3$ | $CH_2CH_2NHSO_2CH_3$ | OH | H | H | H | $CH_2CH_3$ | S | N | Ni |
| 1-142 | $CH_2CH_2CH_2CH_3$ | $CH_2CH_2CH_2CH_3$ | OH | H | H | H | $SCH_2CH_3$ | S | N | Ni |
| 1-143 | $CH_2CH_2CH_2CH_3$ | $CH_2CH_2CH_2CH_3$ | OH | H | H | H | $CH_3$ | S | N | Ni |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-144 | $CH_2CH_3$ | $CH_2CH_3$ | COOH | H | H | H | $SO_2Cl$ | S | N | Ni |
| 1-145 | $CH_2OCH_2CH_2OCH_3$ | $CH_2OCH_2CH_2OCH_3$ | COOH | H | H | H | $CF_3$ | S | N | Ni |
| 1-146 | $CH_2CH_2NHCOCH_3$ | $CH_2CH_2NHCOCH_3$ | COOH | COOH | H | H | SCN | S | N | Ni |
| 1-147 | $CH_2CH_2OCH_2CH(CH_3)_2$ | $CH_2CH_2OCH_2CH(CH_3)_2$ | $SO_3H$ | $SO_3H$ | H | $SO_3H$ | $NO_2$ | S | N | Ni |
| 1-148 | $CH_2CH_3$ | $CH_2CH_3$ | $NHSO_2CH_3$ | $NH_3$ | H | H | CN | S | N | Ni |
| 1-149 | $CH_2CH_2CH_2CH_3$ | $CH_2CH_2CH_2CH_3$ | OH | H | H | $NHSO_2CH_3$ | $SO_2CH_3$ | S | N | Ni |
| 1-150 | $CH_2CH_2CH_2CH_3$ | $CH_2CH_2CH_2CH_3$ | OH | H | H | H | $SCH_2COOCH_2CH_3$ | S | N | Ni |
| 1-151 | $CH_2CH_2SO_2CH_3$ | $CH_2CH_2SO_2CH_3$ | OH | $COCH_3$ | H | H | $CHN=NCH_2CH_3$ | S | N | $Co^{3+}$ |
| 1-152 | $CH_2COCH_2CH_3$ | $CH_2COCH_2CH_3$ | OH | $OCH_2CH_3$ | H | H | $N(CH(CH_3)_2)_2$ | S | N | Ni |
| 1-153 | $CH_2CH_2OH$ | $CH_2CH_2OH$ | $NHCOCH_3$ | H | H | $NHCH_3$ | COOH | S | N | Pd |
| 1-154 | $CH_2COOCH_2CF_2CHF_2$ | $CH_2COOCH_2CF_2CHF_2$ | OH | $COOCH_2CH_3$ | H | H | $SO_3H$ | S | N | Zn |
| 1-155 | $CH_2CH_2CN$ | $CH_2CH_2CN$ | OH | H | H | $CH_2$— 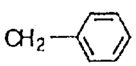 | $NH_3$ | S | N | Ni |
| 1-156 | $CH_2CH=CH_2$ | $CH_2CH=CH_2$ | OH | H | H | 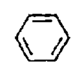 | 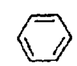 | S | N | Zn |
| 1-157 | $CH_2CH_2CH_2CH_3$ | $CH_2CH_2CH_2CH_3$ | OH | H | H | $CH_3$ | $COCH_2CH_3$ | S | N | Zn |
| 1-158 | 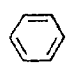 | H | $SO_3H$ | H | H | H | $COOCH_3$ | S | N | Zn |

Table 1 (continued)

| Compound | $R_1$ | $R_2$ | $R_3$ | $R_4$ | $R_5$ | $R_6$ | $R_7$ | X | Y | Metal |
|---|---|---|---|---|---|---|---|---|---|---|
| 1-159 | $CH_2CH_3$ | $CH_2CH_3$ | $SO_3H$ | H | H | $NHSO_3H$ | $CH_2$— 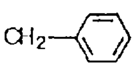 | S | N | $Co^{3+}$ |
| 1-160 | $CH_2CH_3$ | $CH_2CH_3$ | $SO_3H$ | H | H | $SO_2CH_3$ | $NHCOCH_3$ | S | N | Ni |
| 1-161 | Combined with $R_2$ | $CH_2CH_2NHCOCH_3$ | OH | H | H | H | $NHSO_2CH_3$ | S | N | Ni |
| 1-162 | Combined with $R_4$ | Combined with $R_6$ | OH | $(CH_2)_3$ | H | $(CH_2)_3$ | $CH{=}CHCH_3$ | S | N | Ni |
| 1-163 | Combined with $R_4$ | Combined with $R_6$ | OH | $CH_2COCH_2$ | H | $CH_2COCH_2$ | SH | S | N | Ni |

In the present invention, a phthalocyanine compound contained in the dye layer is the phthalocyanine compound represented by Formula (2) having an absorption maximum in a wavelength range of 680 to 900 nm and having preferably a large refractive index and a small absorbance in a wavelength range of 770 to 830 nm.

When the dye layer comprises a two-layer structure of the recording layer and the optical interference layer, the optical constants (refractive index n and attenuation coefficient k) required for the recording layer containing the phthalocyanine compound are 1.8 or more for n and 0.04 to 0.20 for k at the wavelength $\lambda_1$ of the laser beams, and 1.1 or more for n and 0.04 to 0.6 for k at the wavelength $\lambda_2$.

If n is a smaller value than the above range at the wavelength $\lambda_1$, it is difficult to obtain the reflectance and the modulation degree which satisfy the CD standards. The value of n smaller than the above range also at the wavelength $\lambda_2$ makes it difficult to obtain the reflectance needed for reading signals accurately.

Meanwhile, the value of k exceeding 0.20 at the wavelength $\lambda_1$ lowers the reflectance and makes it difficult to satisfy the CD standards, and the value of k less than 0.04 makes recording impossible. The value of k exceeding 0.6 at the wavelength $\lambda_2$ not only increases the absorbance too much and does not provide the reflectance needed for reproduction but also makes the signals to be liable to change by reproducing light. Accordingly, it is not suited to practical use. Considering recording at the wavelength $\lambda_2$, k has to be 0.04 or more.

In the substituents $Y_1$ to $Y_8$ in Formula (2) described above, the hydrocarbon group includes a saturated hydrocarbon group such as methyl, ethyl, butyl, pentyl, hexyl, heptyl, octyl, nonyl, decyl, dodecyl, cyclohexyl and dimethylcyclohexyl, and unsaturated hydrocarbon group such as ethenyl, butenyl, hexenyl, octenyl, dodecenyl, butynyl, heptynyl, phenyl, methylphenyl, butylphenyl and hexylphenyl. These hydrocarbon groups may be linear, branched or cyclic and may be substituted with halogen, an amino group, a cyano group, an ether group or hydroxyl group.

A halogen atom includes fluorine, chlorine, bromine and iodine.

The substitution positions of the substituents of $Y_1$ to $Y_8$ and $A_1$ to $A_4$ bonded to the benzene rings constituting a phthalocyanine ring shall not specifically be restricted, and the kind and number of the substituents may be different for the four benzene rings in the molecule.

The divalent metal atom represented by M includes Cu, Zn, Fe, Co, Ni, Ru, Pd, Pt, Mg, Ti, Be, Ca, Ba, Pb and Cd, and one-substituted trivalent metal includes Al-Cl, Al-Br, Ga-Cl, Ga-Br, In-Cl, In-Br, Ti-Cl, Ti-Br, Al-$C_6H_5$, Al-$C_6H_4(CH_3)$, In-$C_{10}H_7$, Mn(OH), $Mn(OC_6H_5)$, $Mn(OSi(CH_3)_3)$, FeCl and RuCl, and two-substituted tetravalent metal includes $CrCl_2$, $SiCl_2$, $CeBr_2$, $SnCl_2$, $TiCl_2$, $Mn(OH)_2$, $Sn(OH)_2$, $TiR_2$, $CrR_2$, $SiR_2$, $SnR_2$, $GeR_2$ (R represents an alkyl group, a phenyl group, a naphthyl group or a derivative thereof), $Ti(OR')_2$, $Cr(OR')_2$, $Si(OR')_2$ and $Sn(OR')_2$ (R' represents an alkyl group, a phenyl group, a naphthyl group, a trialkylsilyl group, a dialkylalkoxysilyl group or a derivative thereof), and oxy metal includes VO, MnO and TiO.

The concrete examples of the above phthalocyanine compound include the following compounds (Formulas (a) to (c)). To be detailed, given are the compounds described in Japanese Patent Application Laid-Open No. 3-62878 (1991), Japanese Patent Application Laid-Open No. 3-141582 (1991) and Japanese Patent Application Laid-Open No. 3-215466 (1991), and they can be synthesized by the methods described in these publications.

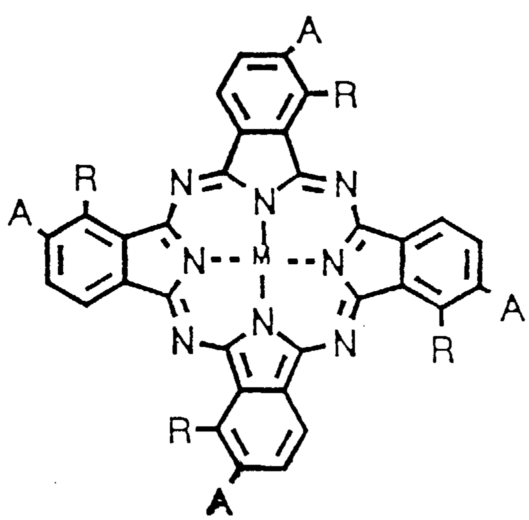

(a)

In Formula (a) described above, the compounds having the substituents and metals shown below:

| Compound | M | A | R |
|---|---|---|---|
| a-1 | Pd | H | $OCH(CH_3)CH(CH_3)_2$ |
| a-2 | Pd | H | $OCH[CH(CH_3)_2]_2$ |
| a-3 | Pd | H | $OCH[CH(CH_3)(C_2H_5)][CH(CH_3)_2]$ |
| a-4 | Pd | H | $OCH_2CH(C_2H_5)C_4H_9$ |
| a-5 | Ni | $NO_2$ | $OCH[CH(CH_3)_2]_2$ |
| a-6 | Ni | H | $S\text{-}n\text{-}C_8H_{17}$ |
| a-7 | Ni | H | $S(CH_2CH_2O)_2CH_3$ |
| a-8 | Cu | H | $OCH[CH(CH_3)(C_2H_5)][CH(CH_3)_2]$ |
| a-9 | VO | H | $OCH_2CH(C_2H_5)C_4H_9$ |
| a-10 | Cu | H | $OCH_2CH_2OCH_2CH_2OCH_3$ |
| a-11 | VO | H | $OCH_2(CF_2)_3CF_2H$ |

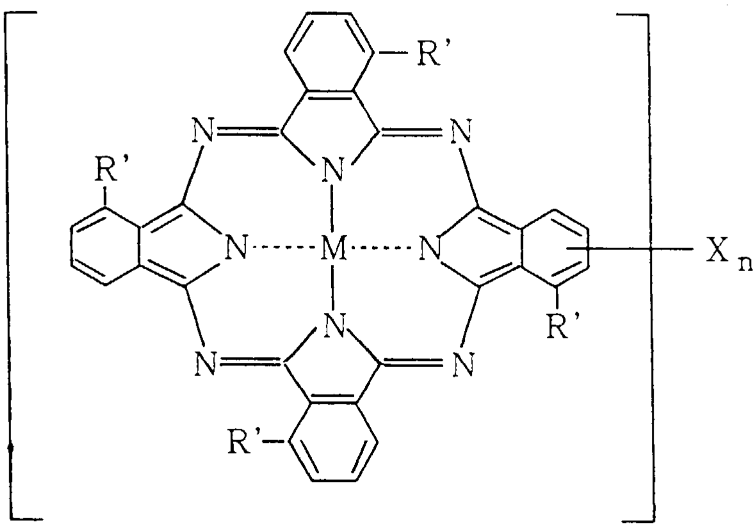

(b)

In Formula (b) described above, the compounds having the substituents and metals shown below:

| Compound | M | Xn | R' |
|---|---|---|---|
| b-1 | Pd | $Br_{2.5}$ | $OCH(CH_3)CH(CH_3)_2$ |
| b-2 | Pd | $Cl_8$ | $OCH[CH(CH_3)_2]_2$ |
| b-3 | Pd | $Br_4$ | $OCH[CH(CH_3)(C_2H_5)][CH(CH_3)_2]$ |
| b-4 | Pd | $Br_4$ | $OCH(CH_3)CH(CH_3)_2$ |
| b-5 | Pd | $I_4$ | $OCH(CH_3)CH(CH_3)_2$ |
| b-6 | Pd | $I_{3.2}$ | $OCH_2CH(C_2H_5)C_4H_9$ |
| b-7 | Pd | $Br_4$ | $OCH[CH(CH_3)_2]_2$ |
| b-8 | Pd | $Br_4$ | $OCH(CH_3)CH_2CH(CH_3)_2$ |
| b-9 | Pd | $Br_{3.5}$ | $OCH(CH_3)CH(CH_3)_2$ |

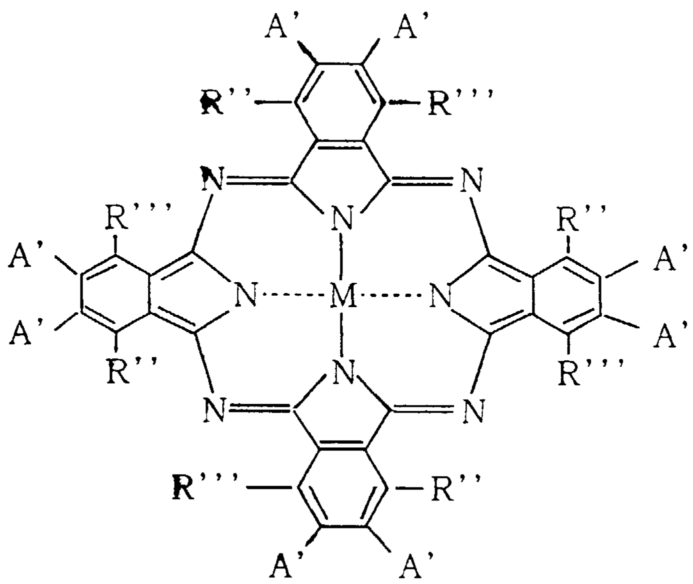

(c)

In Formula (c) described above, the compounds having the substituents and metals shown below:

| Compound | M | A' | R'' | R''' |
|---|---|---|---|---|
| c-1 | Pd | H | $O(CH_2)_2CH(CH_3)_2$ | $O(CH_2)_2CH(CH_3)_2$ |
| c-2 | Pd | Cl | $O(CH_2)_2CH(CH_3)_2$ | $O(CH_2)_2CH(CH_3)_2$ |
| c-3 | Pd | H | $O$-n-$C_5H_{11}$ | $O$-n-$C_5H_{11}$ |
| c-4 | Pd | Cl | $O(CH_2)_2CH(CH_3)_2$ | $O$-n-$C_4H_9$ |
| c-5 | Pd | H | $OCH_2CH(C_2H_5)C_4H_9$ | $OCH_2CH(C_2H_5)C_4H_9$ |
| c-6 | Ni | SPh | $O$-n-$C_8H_{17}$ | $O$-n-$C_8H_{17}$ |
| c-7 | Cu | Cl | $O(CH_2)_2CH(CH_3)_2$ | $O(CH_2)_2CH(CH_3)_2$ |
| c-8 | Al | Cl | $O(CH_2)_2CH(CH_3)_2$ | $O(CH_2)_2CH(CH_3)_2$ |
| c-9 | VO | Cl | $O$-n-$C_8H_{17}$ | $O$-n-$C_8H_{17}$ |
| c-10 | Cu | Cl | $O$-n-$C_8H_{17}$ | $O$-n-$C_8H_{17}$ |
| c-11 | Cu | Cl | $O(CH_2)_2N(C_2H_5)_2$ | $OCH_3$ |
| c-12 | Ni | H | $O$-n-$C_8H_{17}$ | $O$-n-$C_8H_{17}$ |

These phthalocyanine compounds may be used alone or in a mixture of the plural compounds.

A method for providing the dye layer in the present invention includes, for example, dipping, spraying, spin coating, casting, sputtering, chemical deposition and vacuum deposition, and the spin coating is preferred since it is simple.

When a coating method such as spin coating is used, a coating solution prepared by dissolving or dispersing the azo compound represented by Formula (1) or the metal complex thereof and/or the phthalocyanine compound represented by Formula (2) (hereinafter referred to as the dye) in a range of 0.05 to 30 weight %, preferably 0.5 to 20 weight % is used. In this case, a solvent which does not damage the substrate is preferably selected. The solvent includes, for example, alcohol series solvents such as methanol, ethanol, isopropanol, octafluoropentanol, allyl alcohol, methyl cellosolve, ethyl cellosolve and tetrafluoropropanol, aliphatic or alicyclic hydrocarbon series solvents such as hexane, heptane, octane, decane, cyclohexane, methylcyclohexane, ethylcyclohexane and dimethylcyclohexane, aromatic hydrocarbon series solvents such as toluene, xylene and benzene, halogenated hydrocarbon solvents such as carbon tetrachloride, chloroform, tetrachloroethane and dibromoethane, ether solvents such as diethyl ether, dibutyl ether, diisopropyl ether and dioxane, ketone solvents such as acetone and 3-hydroxy-3-methyl-2-butanone, ester solvents such as ethyl acetate and methyl lactate, and water. They may be used alone or in a mixture of plural solvents.

When the dye layer comprises a two-layer structure of the recording layer and the optical interference layer, the phthalocyanine compound used in the recording layer and the azo compound or the metal complex thereof used in the optical interference layer each dissolved in different polar solvents are used, and each is preferably not dissolved

in the other solvent.

The azo compound or the metal complex (dye) thereof used in the optical interference layer is dissolved in high polar solvents, for example, alcohol solvents and water, and coated, and the phthalocyanine compound (dye) used in the recording layer is dissolved in a low polar solvent, for example, aliphatic or alicyclic hydrocarbon solvents, aromatic hydrocarbon solvents, carbon tetrachloride and ether solvents, and coated. In order to decrease damage to a resin substrate or influence to a multilayer film, solvents for coating and forming the respective dye layers are preferably an aliphatic or alicyclic hydrocarbon solvent and a mixed solvent thereof with other solvents, and an alcohol solvent and a mixed solvent thereof with other solvents. A combination of the dyes soluble in the respective solvents is particularly desired.

It may be possible, if necessary, to disperse the dyes for the dye layer into a polymer film.

When solvents which do not damage the substrate can not be selected, sputtering, chemical deposition and vacuum deposition are effective.

A film thickness of the dye layer shall not specifically be restricted and is preferably 50 to 300 nm. The film thickness of the dye layer smaller than 50 nm not only makes recording impossible or causes distortion on recording signals because of large heat diffusion, but also decreases signal amplitudes. As a result the CD standards are not satisfied. Meanwhile, the film thickness larger than 300 nm lowers the reflectance to deteriorate the reproducing signal characteristics.

When the dye layer comprises a two-layer structure of the recording layer and the optical interference layer, an average film thickness of the optical interference layer satisfies the following equation at the wavelengths of $\lambda_1$ and $\lambda_2$ and preferably is a thickness at which the reflectance becomes larger at the respective laser wavelengths:

$$70 \leq ni \times di \leq 300$$

wherein ni is a refractive index of the optical interference layer, and di is a film thickness of the optical interference layer.

In the case where ni × di is less than 70, the reflectance to light having the wavelength $\lambda_2$ is less than 15 %, and the modulation degree decreases as well. In the case where ni × di exceeds 300, the reflectance to light having the wavelength $\lambda_1$ is less than 65 %.

If necessary, additives such as a quencher, a thermal decomposition promotor of dyes, a UV absorber and an adhesive may be blended with the dyes described above, or groups having such effects may be introduced as substituents into the dyes.

Preferred as the quencher are metal complexes based on acetyl acetonates, bisdithio-α-diketones, bisdithiols such as bisphenyldithiol, thiocatechols, salicylaldehyde oximes and thiobisphenolates. Further, amines are suitable as well.

The thermal decomposition promoter shall not specifically be restricted as long as promotion of thermal decomposition of the dyes can be confirmed by means of thermogravimetric analysis (TG analysis), and includes metal compounds such as metalic antiknocking agents, metallocene compounds and acetylacetonato metal complexes.

Further, binders, leveling agents, and defoaming agents may be used as well in combination, if necessary. The preferred binder includes polyvinyl alcohol, polyvinyl pyrrolidone, nittrocellulose, cellulose acetate, ketone resins, acrylic resins, polystyrene resins, urethane resins, polyvinyl butyral, polycarbonate, polyolefins, and the like.

Further, dyes other than those described above may be added as well in order to improve recording characteristics.

The examples of the dyes include pentamethinecyanine dyes, heptamethinecyanine dyes, squalillium dyes, naphthoquinone dyes, azo dyes, naphthalocyanine dyes, phthalocyanine dyes and anthraquinone dyes. A blending ratio of these dyes falls in a level of 0.1 to 10 %.

In forming the dye layer on the substrate, a layer comprising inorganic substances or polymers may be provided on the substrate in order to improve the solvent resistance of the substrate, reflectance and the recording sensitivity.

The content of the azo compound represented by Formula (1) or the metal complex thereof and/or the phthalocyanine compound represented by Formula (2) in the dye layer is 30 % or more, preferably 60 % or more. It may be substantially 100 %.

Next, a reflective layer having a thickness of preferably 50 to 300 nm is formed on the dye layer described above. Substances providing sufficiently high reflectances at wavelengths of reproducing lights, for example, metals such as Au, Al, Ag, Cu, Ti, Cr, Ni, Pt, Ta, Cr and Pd can be used as a material for the reflective layer alone or in the form of alloys. Among them, Au and Al have the high reflectances and therefore are suitable to the material for the reflective layer. In addition to the above substances, the following ones may be contained. There may be included, for example, metals and semi-metals such as Mg, Se, Hf, V, Nb, Ru, W, Mn, Re, Fe, Co, Rh, Ir, Cu, Zn, Cd, Ga, In, Si, Ge, Te, Pb, Po, Sn and Bi. A substance containing Au as a main component is suitable since the reflective layer having

a high reflectance can readily be obtained. The term "main component" means a component having a content of 50 % or more. A multilayer film may be formed for the reflective layer with materials other than metals by laminating a thin film having a low refractive index and a thin film having a high refractive index after the other.

Methods for forming the reflective layer include, for example, sputtering, ion plating, chemical deposition and vacuum deposition. Further, a known inorganic or organic intermediate layer and an adhesive layer may be provided on the substrate or under the reflective layer in order to improve the reflectance and the recording characteristics.

Further, a protective layer is formed on the reflective layer in order to protect the dye layer and the reflective layer. Two sheets of the media may be stuck together.

Materials for the protective layer shall not specifically be restricted as long as they can protect the reflective layer from external force. The organic materials include thermoplastic resins, thermosetting resins, electron beam-curing resins, and UV-curing resins. The inorganic materials include $SiO_2$, $SiN_4$, $MgF_2$, and $SnO_2$. The protective layer can be formed by applying a coating solution prepared by dissolving a thermoplastic resin or a thermosetting resin in a suitable solvent, and drying it. A UV curing resin is applied as it is or as a solution prepared by dissolving it in a suitable solvent, and it is irradiated with UV rays to cure, whereby the protective layer can be formed. Acrylate resins such as, for example, urethane acrylates, epoxy acrylates and polyester acrylates can be used as the UV-curing resin. These materials may be used alone or in a mixture, and they may be used not only in a single layer film but also in a multilayer film.

Coating methods such as spin coating and casting, and methods such as sputtering and chemical deposition are used as a method for forming the protective layer as is the case with the recording layer. Among them, the spin coating is preferred.

In general, the film thickness of the protective layer falls in a range of 0.1 to 100 μm. In the present invention, however, it is 3 to 30 μm, preferably 5 to 20 μm.

Further, printing such as labeling can be applied on the protective layer.

A film of a UV-curing resin or an inorganic film may be formed on a specular side of the substrate in order to protect the surface and prevent dusts from sticking thereon.

The optical recording medium of the present invention thus obtained can record and reproduce by focusing laser beams on the dye layer. Signals used in recording include, for example, EMF modulation signals used for CD. The medium of the present invention can be recorded and reproduced with laser beams having a wavelength of about 780 nm since the reflectance of 65 % or more to light having a wavelength selected from 770 to 830 nm can be obtained. Further, recorded information can be reproduced with commercial CD and CD-ROM players. The characteristics of the signals reproduced satisfy the orange book standards which are the standards of CD-R. Further, the medium of the present invention provides a reflectance of 15 % or more to light having a wavelength falling in a range of 620 to 690 nm and therefore can be reproduced with an optical disc player for high density recording media loaded with a laser having a wavelength selected from arrange of 620 to 690 nm. Light used for players for high density recording media in the next age has a wavelength falling in a range of 620 to 690 nm. Lasers having wavelengths falling in this range include dye lasers, which have wavelengths to be selected in a wide range of a visible ray region, and a helium-neon laser having a wavelength of 633 nm. Further, semiconductor lasers which are put into practical use have a wavelength of, for example, 635 nm, 650 nm or about 680 nm. The medium of the present invention can be recorded as well with light having a wavelength selected from a range of 620 to 690 nm.

## EXAMPLES

The examples of the present invention shall be shown below but the present invention shall by no means be restricted by these examples.

### Example 1:

The azo compound (1-19) of 0.2 g shown in Table-1 out of the azo compounds represented by Formula (1) and the phthalocyanine compound of 0.02 g represented by the chemical formula (a-11) described previously were dissolved in diacetone alcohol (produced by Tokyo Kasei K.K.) of 10 ml to prepare a dye solution. Used as a substrate was a disc (made of polycarbonate resin) having a diameter of 120 mm and a thickness of 1.2 mm with a spiral pre-groove (track pitch: 1.6 μm).

The dye solution was spin-coated on this substrate at a revolution of 1500 rpm and dried at 70°C for 2 hours to form a recording layer. Au was sputtered on this recording layer with a sputtering equipment (CDI-900: manufactured by Balzers Co., Ltd.) to form a reflective layer having a thickness of 100 nm. Sputtering was carried out at a gas pressure of 1.33 Pa (1.0 x $10^{-2}$ Torr).

Further, a UV-curing resin SD-17 (manufactured by Dainippon Ink Chemical Ind. Co., Ltd.) was spin-coated on the reflective layer and then irradiated with UV rays to form a protective layer having a thickness of 6 μm.

Recording was carried out on the optical recording medium thus obtained at a linear velocity of 5.6 m/s and a laser power of 10 mW with an optical disc evaluation apparatus DDU-1000 (manufactured by Pulstec Ind. Co., Ltd.) loaded with a red semiconductor laser head having a wavelength of 680 nm, and an EFM encoder (manufactured by Kenwood Co., Ltd.). After recording, the signals were reproduced with an evaluation apparatus loaded with a red semiconductor laser head having a wavelength of 635 nm to determine the reflectance.

Further, this recorded sample was reproduced and evaluated with a commercial CD player having a reproducing wavelength of 780 nm to find that the sample showed good recording characteristics.

Examples 2 to 28:

Optical recording media were produced in the same manner as described in Example 1, except that the azo compounds described in Table-1 and the phthalocyanine compounds represented by the chemical formulas (a-10 to 11) described previously were used in combination.

Recording was carried out on the optical recording media thus obtained in the same manner as that in Example 1 at a linear velocity of 5.6 m/s and a laser power of 10 mW with the optical disc evaluation apparatus DDU-1000 (manufactured by Pulstec Ind. Co., Ltd.) loaded with the red semiconductor laser head having a wavelength of 680 nm and the EFM encoder (manufactured by Kenwood Co., Ltd.). After recording, the same measurements as those in Example 1 were carried out to find that the good recording characteristics were shown in any cases.

Example 29:

First, a solution prepared by dissolving 0.8 g of the phthalocyanine compound represented by the chemical formula (b-7) described previously in dimethylcyclohexane (produced by Tokyo Kasei K.K.) of 40 ml was used to form a recording layer by spin-coating. Then, the azo compound (1-31) described in Table-1 was used to form an interference layer on this recording layer on the same conditions as those in Example 1, whereby an optical recording medium comprising two layers of the interference layer and the recording layer was prepared.

Recording was carried out on the optical recording medium thus produced at a linear velocity of 2.8 m/s and a laser power of 8 mW with the optical disc evaluation apparatus DDU-1000 (manufactured by Pulstec Ind. Co., Ltd.) loaded with a near infrared semiconductor laser head having a wavelength of 780 nm, and the EFM encoder (manufactured by Kenwood Co., Ltd.). After recording, the same measurements as in Example 1 were carried out to find that the good recording characteristics were shown in any cases.

Further, the signals were reproduced with an evaluation apparatus loaded with a red semiconductor laser head having a wavelength of 680 nm to find that such good recording characteristics as the reflectance of 31 % were shown.

Examples 30 to 46:

Optical recording media were produced in the same manner as that described in Example 29, except that the azo compounds described in Table-1 and the phthalocyanine compounds represented by the chemical formulas (b-1 to c-10) described previously were used in combination.

Recording was carried out on the optical recording media thus produced at a linear velocity of 2.8 m/s and a laser power of 8 mW with the optical disc evaluation apparatus DDU-1000 (manufactured by Pulstec Ind. Co., Ltd.) loaded with the near infrared semiconductor laser head having a wavelength of 780 nm, and the EFM encoder (manufactured by Kenwood Co., Ltd.). After recording, the same measurements as those in Example 1 were carried out to find that the good recording characteristics were shown in any cases.

Further, the signals were reproduced with the evaluation apparatus loaded with the red semiconductor laser head having a wavelength of 680 nm to find that such good recording characteristics as the reflectances of 30 % or more were shown in the respective cases.

Example 47:

First, a solution prepared by dissolving 0,8 g of the phthalocyanine compound represented by the chemical formula (b-7) described previously in dimethylcyclohexane (produced by Tokyo Kasei K.K.) of 40 ml was used to form a recording layer by spin-coating. Then, the azo compound (1-83) described in Table-1 was used to form an interference layer on this recording layer on the same conditions as those in Example 1, whereby an optical recording medium comprising two layers of the interference layer and the recording layer was prepared.

Recording was carried out on the optical recording medium thus produced at a linear velocity of 5.6 m/s and a laser power of 10 mW with the optical disc evaluation apparatus DDU-1000 (manufactured by Pulstec Ind. Co., Ltd.)

loaded with the red semiconductor laser head having the wavelength of 680 nm, and the EFM encoder (manufactured by Kenwood Co., Ltd.). After recording, the same measurements as those in Example 1 were carried out to find that the good recording characteristics were shown in any cases.

Further, the signals were reproduced with the evaluation apparatus loaded with the red semiconductor laser head having a wavelength of 680 nm to find that such good recording characteristics as the reflectance of 30 % were shown.

Example 48:

An optical recording medium was produced in the same manner as that described in Example 47, except that the azo compound (1-39) described in Table-1 and the phthalocyanine compound (b-7) represented by the chemical formula described previously were used in combination.

Recording was carried out on the optical recording medium thus produced at a linear velocity of 5.6 m/s and a laser power of 10 mW with the optical disc evaluation apparatus DDU-1000 (manufactured by Pulstec Ind. Co., Ltd.) loaded with the red semiconductor laser head having a wavelength of 680 nm, and the EFM encoder (manufactured by Kenwood Co., Ltd.). After recording, the same measurements as those in Example 1 were carried out to find that the good recording characteristics were shown in any cases.

Further, the signals were reproduced with the evaluation apparatus loaded with the red semiconductor laser head having a wavelength of 680 nm to find that such good recording characteristics as the reflectance of 30 % were shown.

Shown in Table 2 together are the measured results of the reflectances in reproducing with the red semiconductor laser having a wavelength of 635 nm and the reflectances and the error rates in reproducing with a commercial CD player.

Table 2

| | Chemical formula No. | | Reproduction | | |
|---|---|---|---|---|---|
| Example | Azo | Phthalocyanine | 635 nm | 780 nm | |
| | | | Reflectance (%) | Reflectance (%) | Error rate (cps) |
| 1 | 1-19 | a-11 | 27.9 | 69.5 | 6 |
| 2 | 1-20 | a-11 | 31.5 | 71.2 | 7 |
| 3 | 1-21 | a-11 | 29.4 | 70.6 | 5 |
| 4 | 1-22 | a-11 | 29.6 | 71.4 | 8 |
| 5 | 1-23 | a-11 | 31.2 | 69.3 | 5 |
| 6 | 1-24 | a-11 | 30.1 | 70.5 | 9 |
| 7 | 1-25 | a-10 | 34.3 | 71.8 | 5 |
| 8 | 1-26 | a-10 | 33.2 | 70.4 | 5 |
| 9 | 1-27 | a-10 | 32.7 | 73.1 | 7 |
| 10 | 1-28 | a-10 | 32.1 | 72.3 | 4 |
| 11 | 1-29 | a-10 | 31.4 | 71.0 | 6 |
| 12 | 1-30 | a-10 | 33.8 | 69.1 | 7 |
| 13 | 1-63 | a-11 | 34.0 | 72.3 | 6 |
| 14 | 1-64 | a-11 | 31.2 | 72.4 | 6 |
| 15 | 1-65 | a-11 | 31.6 | 73.4 | 4 |
| 16 | 1-66 | a-11 | 34.7 | 71.5 | 6 |
| 17 | 1-67 | a-11 | 32.1 | 73.2 | 8 |
| 18 | 1-68 | a-11 | 30.4 | 71.4 | 5 |
| 19 | 1-69 | a-11 | 31.3 | 72.1 | 4 |
| 20 | 1-70 | a-11 | 33.3 | 71.3 | 5 |
| 21 | 1-71 | a-10 | 29.8 | 73.1 | 6 |
| 22 | 1-72 | a-10 | 33.2 | 69.7 | 7 |
| 23 | 1-73 | a-10 | 33.0 | 71.6 | 7 |
| 24 | 1-74 | a-10 | 29.7 | 70.0 | 9 |
| 25 | 1-75 | a-10 | 28.3 | 69.2 | 5 |

Table 2 (continued)

| | Chemical formula No. | | Reproduction | | |
|---|---|---|---|---|---|
| Example | Azo | Phthalocyanine | 635 nm | 780 nm | |
| | | | Reflectance (%) | Reflectance (%) | Error rate (cps) |
| 26 | 1-76 | a-10 | 32.7 | 70.9 | 7 |
| 27 | 1-77 | a-10 | 32.7 | 70.7 | 8 |
| 28 | 1-78 | a-10 | 31.5 | 71.3 | 5 |
| 29 | 1-31 | b-7 | 32.6 | 71.3 | 4 |
| 30 | 1-32 | b-7 | 33.0 | 70.9 | 5 |
| 31 | 1-34 | c-10 | 29.6 | 72.8 | 4 |
| 32 | 1-35 | c-9 | 32.2 | 71.0 | 7 |
| 33 | 1-36 | c-7 | 29.3 | 69.7 | 8 |
| 34 | 1-37 | b-8 | 32.3 | 72.2 | 8 |
| 35 | 1-38 | b-1 | 28.8 | 70.7 | 6 |
| 36 | 1-30 | b-6 | 31.6 | 71.5 | 7 |
| 37 | 1-79 | b-7 | 33.3 | 73.7 | 4 |
| 38 | 1-80 | b-7 | 33.4 | 72.8 | 4 |
| 39 | 1-81 | b-7 | 32.1 | 70.5 | 5 |
| 40 | 1-82 | b-7 | 27.6 | 73.9 | 8 |
| 41 | 1-84 | c-10 | 29.7 | 71.8 | 7 |
| 42 | 1-85 | c-9 | 31.2 | 71.0 | 8 |
| 43 | 1-86 | c-7 | 30.6 | 72.7 | 8 |
| 44 | 1-87 | b-8 | 28.4 | 68.6 | 6 |
| 45 | 1-88 | b-1 | 30.0 | 70.3 | 6 |
| 46 | 1-78 | b-6 | 31.2 | 72.3 | 5 |
| 47 | 1-83 | b-7 | 31.4 | 72.1 | 5 |
| 48 | 1-39 | b-7 | 32.1 | 70.3 | 6 |

Example 49:

The metal complex (1-93) of the azo compound of 0.2 g shown in Table-1 out of the metal complexes of the azo compounds represented by Formula (1) and 0.02 g of the phthalocyanine compound (a-10) represented by the chemical formula described previously were dissolved in 2,2,3,3-tetrafluoro-1-propanol of 10 ml to prepare a dye solution. Used as a substrate was a disc having a diameter of 120 mm and a thickness of 1.2 mm, which was made of polycarbonate resin and had a spiral pre-groove (track pitch: 1.6 µm).

The dye solution was spin-coated on this substrate at a revolution of 1500 rpm and dried at 70°C for 2 hours to form a recording layer. Au was sputtered on this recording layer with the sputtering equipment (CDI-900: manufactured by Balzers Co., Ltd.) to form a reflective layer having a thickness of 100 nm. Sputtering was carried out at a gas pressure of 1.33 Pa (1.0 x $10^{-2}$ Torr). Further, the UV-curing resin SD-17 (manufactured by Dainippon Ink Chemical Ind. Co., Ltd.) was spin-coated on the reflective layer and then irradiated with UV rays to form a protective layer having a thickness of 6 µm.

EFM signals were recorded on this optical recording medium at a linear velocity of 2.8 m/s and a laser power of 8 mW with a writer (CDD-521: manufactured by Philiphs Co., Ltd.). After recording, the signals were reproduced with a commercial CD player (YAMAHA CDX-1050; laser wavelength: 786 nm) to determine the reflectance, the error rate and the modulation degree. As a result, the distortion of the reproducing wave form was small, and therefore the good values satisfying the orange book standards were shown. Next, the signals recorded on this medium were reproduced with the optical disc evaluation apparatus (DDU-1000: manufactured by Pulstec Ind. Co., Ltd.) loaded with a red semiconductor laser head having wavelengths of 680 nm and 635 nm to determine the reflectance, the error rate and the modulation degree (I3/Itop) of the shortest pit. It has been confirmed that the good values are shown in any cases.

Next, recording was carried out on this medium at a linear velocity of 5.6 m/s and a laser power of 10 mW with the optical disc evaluation apparatus (DDU-1000: manufactured by Pulstec Ind. Co., Ltd.) loaded with the red semiconductor laser head having a wavelength of 680 nm, and the EFM encoder (manufactured by Kenwood Co.,

Ltd.). After recording, the signals were reproduced with an evaluation apparatus loaded with a red semiconductor laser head having wavelengths of 680 nm and 635 nm to determine the reflectance, the error rate and the I3/Itop. The good values were shown in any cases. The signals recorded on the medium with the above drive (DDU-1000) having a wavelength of 680 nm were reproduced with the commercial CD player (YAMAHA CDX-1050; laser wavelength: 786 nm) to determine the reflectance, the error rate and the I3/Itop. The good values satisfying the orange book standards were shown in any cases.

Examples 50 to 54:

Optical recording media were produced in the same manner as that described in Example 49, except that the metal complexes of the azo compounds described in Table-1 out of the metal complexes of the azo compounds represented by Formula (1), and the phthalocyanine compounds represented by the chemical formulas (a-10 to 11) described previously were used in combination (shown in Table 3).

The media thus produced recorded and was evaluated in the same manners as those in Example 49. As a result, it has been confirmed that the good values are shown in any cases.

Example 55:

The metal complex (1-89) of the azo compound of 0.2 g shown in Table-1 out of the metal complexes of the azo compounds represented by Formula (1) was dissolved in 2,2,3,3-tetrafluoro-1-propanol of 10 ml to prepare a dye solution 1.

Used as a substrate was a disc having a diameter of 120 mm and a thickness of 1.2 mm, which was made of polycarbonate resin and had a spiral pre-groove (170 nm thick, 0.5 µm wide, track pitch: 1.6 µm).

The dye solution 1 was spin-coated on this substrate at a revolution of 1500 rpm and dried at 70°C for 3 hours to form a dye optical interference layer. With respect to the optical constants of this optical interference layer, the refractive index was 1.9 and the attenuation coefficient was 0.05 at 780 nm; the refractive index was 2.1 and the attenuation coefficient was 0.04 at 680 nm; and the refractive index was 2.5 and the attenuation coefficient was 0.10 at 635 nm. Accordingly, the products (ni × di) of the refractive indices and the film thickness at 780, 680 and 635 nm were 152, 168 and 200, respectively.

Further, a dye solution 2 prepared by dissolving 0.25 g of the phthalocyanine compound (c-2) represented by the chemical formula described previously in 1,2-dimethylcyclohexane of 10 ml was spin-coated at a revolution of 1600 rpm and dried at 70°C for 2 hours to form a recording layer. With respect to the optical constants of this recording layer, the refractive index was 2.2 and the attenuation coefficient was 0.08 at 780 nm; the refractive index was 1.2 and the attenuation coefficient was 0.49 at 680 nm; and the refractive index was 1.2 and the attenuation coefficient was 0.34 at 635 nm.

Next, Au was sputtered on this recording layer with the sputtering equipment (CDI-900: manufactured by Balzers Co., Ltd.) to form a reflective layer having a thickness of 100 µm. Further, the UV-curing resin SD-17 (manufactured by Dainippon Ink Chemical Ind. Co., Ltd.) was spin-coated on the reflective layer, and then irradiated with UV rays to form a protective layer having a thickness of 6 µm, whereby an optical recording medium was prepared.

EFM signals were recorded on this optical recording medium at a linear velocity of 2.8 m/s and a laser power of 8 mW with the writer (CDD-521: manufactured by Philiphs Co., Ltd.). After recording, the signals were reproduced with the commercial CD player (YAMAHA CDX-1050; laser wavelength: 786 nm) to determine the reflectance, the error rate and the modulation degree. As a result, the distortion of the reproducing wave form was small, and therefore the good values satisfying the orange book standards were shown. Next, the signals recorded on this medium were reproduced with the optical disc evaluation apparatus (DDU-1000: manufactured by Pulstec Ind. Co., Ltd.) loaded with the red semiconductor laser head having wavelengths of 680 nm and 635 nm to determine the reflectance, the error rate and the modulation degree (I3/Itop) of the shortest pit. The good values were shown in any cases.

Next, recording was carried out on this medium at a linear velocity of 5.6 m/s and a laser power of 10 mW with the optical disc evaluation apparatus (DDU-1000: manufactured by Pulstec Ind. Co., Ltd.) loaded with the red semiconductor laser head having a wavelength of 680 nm and the EFM encoder (manufactured by Kenwood Co., Ltd.). After recording, the signals were reproduced with the evaluation apparatus loaded with the red semiconductor laser head having wavelengths of 680 nm and 635 nm to determine the reflectance, the error rate and the I3/Itop. The good values were shown in any cases. The signals recorded on the medium with the above drive (DDU-1000) having a wavelength of 680 nm were reproduced with the commercial CD player (YAMAHA CDX-1050; laser wavelength: 786 nm) to determine the reflectance, the error rate and the I3/Itop. The good values satisfying the orange book standards were shown in any cases.

Examples 56 to 58:

Optical recording media each having a recording layer formed on an optical interference layer were produced in the same manner as that described in Example 55, except that the metal complexes of the azo compounds described in Table-1 out of the metal complexes of the azo compounds represented by Formula (1), and the phthalocyanine compounds represented by the chemical formulas (b-3 and c-2) described previously were used in combination (shown in Table-3).

The media thus produced was recorded at 780 nm and 680 nm and reproduced at 786 nm, 680 nm and 635 nm in the same manners as those in Example 55. As a result, the good recording characteristics were shown in any of the above wavelengths.

Example 59:

An optical recording medium was prepared in the same manner as that described in Example 55, except that the coating order was reversed and that the phthalocyanine compound (c-2) represented by the chemical formula described previously was applied for a recording layer and the metal complex (1-89) of the azo compound described in Table-1 was applied thereon for an optical interference layer.

The medium thus prepared was recorded and reproduced in the same manners as those in Example 55. As a result, the good recording characteristics were shown in any of the wavelengths.

Examples 60 to 133:

Optical recording media each having an optical interference layer formed on a recording layer were prepared and evaluated in the same manners as those described in Example 59, except that the metal complexes of the azo compounds described in Table-1 and the phthalocyanine compounds represented by the chemical formulas (a-6 to c-2) described previously were used in combination.

Described in Table-3 are the combinations of the dyes, the optical constants [refractive index (n) and attenuation coefficient (k)] of the recording layers and the optical interference layers at 780, 680 and 635 nm, the film thicknesses of the optical interference layers and the ni × di values.

All the media had large modulation degrees and small error rates and jitters in a recording mode of high to low at the respective wavelengths of 780, 680 and 635 nm, and therefore very good reproductions could be made.

Table 3

| | | | Example | | | | | | | | | | | | | |
|---|---|---|---|---|---|---|---|---|---|---|---|---|---|---|---|---|
| | | | 49 | 50 | 51 | 52 | 53 | 54 | 55 | 56 | 57 | 58 | 59 | 60 | 61 | 62 |
| Recording layer formula No. | | | a-10 | a-11 | a-10 | a-10 | a-11 | a-10 | c-2 | b-3 | c-2 | b-3 | c-2 | b-3 | c-2 | b-3 |
| | | | 1-93 | 1-94 | 1-94 | 1-133 | 1-134 | 1-134 | | | | | | | | |
| Interference layer formula No. | | | | | | | | | 1-89 | 1-90 | 1-129 | 1-130 | 1-89 | 1-90 | 1-129 | 1-130 |
| film thickness (nm) | | | | | | | | | 80 | 100 | 80 | 100 | 75 | 100 | 75 | 100 |
| Optical constants | | | | | | | | | | | | | | | | |
| Recording layer | 780 nm | n*1 | | | | | | | 2.2 | 2.3 | 2.2 | 2.3 | 2.2 | 2.2 | 2.2 | 2.2 |
| | | k*2 | | | | | | | 0.08 | 0.12 | 0.08 | 0.12 | 0.08 | 0.08 | 0.08 | 0.08 |
| | 680 nm | n | | | | | | | 1.2 | 1.3 | 1.2 | 1.3 | 1.2 | 1.2 | 1.2 | 1.2 |
| | | k | | | | | | | 0.49 | 0.51 | 0.49 | 0.51 | 0.49 | 0.49 | 0.49 | 0.49 |
| | 635 nm | n | | | | | | | 1.2 | 1.2 | 1.2 | 1.2 | 1.2 | 1.2 | 1.2 | 1.2 |
| | | k | | | | | | | 0.34 | 0.30 | 0.34 | 0.30 | 0.34 | 0.34 | 0.34 | 0.34 |
| Interference layer | 780 nm | n | | | | | | | 1.9 | 1.8 | 1.9 | 1.8 | 1.9 | 1.9 | 1.9 | 1.9 |
| | | k | | | | | | | 0.05 | 0.06 | 0.05 | 0.06 | 0.12 | 0.05 | 0.12 | 0.05 |
| | 680 nm | n | | | | | | | 2.1 | 1.9 | 2.1 | 1.9 | 2.1 | 2.1 | 2.1 | 2.1 |
| | | k | | | | | | | 0.04 | 0.05 | 0.04 | 0.05 | 0.12 | 0.04 | 0.12 | 0.04 |
| | 635 nm | n | | | | | | | 2.5 | 2.2 | 2.4 | 2.2 | 2.6 | 2.5 | 2.6 | 2.5 |
| | | k | | | | | | | 0.10 | 0.10 | 0.10 | 0.10 | 0.14 | 0.10 | 0.14 | 0.10 |
| ni × di*3 | 780 nm | | | | | | | | 152 | 180 | 152 | 180 | 143 | 190 | 143 | 190 |
| | 680 nm | | | | | | | | 168 | 190 | 168 | 190 | 158 | 210 | 158 | 210 |
| | 635 nm | | | | | | | | 200 | 220 | 200 | 220 | 195 | 250 | 195 | 250 |

*1 n: refractive index *2 k: attenuation coefficient

*3 refractive index × film thickness in interference layer

Table 3 (continued)

| | | | Example 63 | 64 | 65 | 66 | 67 | 68 | 69 | 70 | 71 | 72 |
|---|---|---|---|---|---|---|---|---|---|---|---|---|
| Recording layer formula No. | | | a-11 | a-11 | a-11 | a-10 | a-10 | a-10 | a-11 | a-11 | a-11 | a-11 |
| Interference layer formula No. | | | 1-91 | 1-92 | 1-93 | 1-94 | 1-95 | 1-96 | 1-97 | 1-98 | 1-99 | 1-100 |
| film thickness (nm) | | | 80 | 90 | 90 | 80 | 75 | 100 | 60 | 45 | 80 | 90 |
| Optical constants | | | | | | | | | | | | |
| Recording layer | 780 nm | n*1 | 2.3 | 2.2 | 2.1 | 2.2 | 2.2 | 2.2 | 2.2 | 2.3 | 2.1 | 2.2 |
| | | k*2 | 0.10 | 0.11 | 0.08 | 0.10 | 0.09 | 0.09 | 0.11 | 0.13 | 0.08 | 0.07 |
| | 680 nm | n | 1.2 | 1.3 | 1.3 | 1.2 | 1.2 | 1.2 | 1.2 | 1.2 | 1.2 | 1.3 |
| | | k | 0.48 | 0.50 | 0.48 | 0.46 | 0.48 | 0.49 | 0.45 | 0.46 | 0.49 | 0.43 |
| | 635 nm | n | 1.2 | 1.1 | 1.2 | 1.1 | 1.2 | 1.2 | 1.1 | 1.1 | 1.2 | 1.2 |
| | | k | 0.34 | 0.30 | 0.31 | 0.29 | 0.32 | 0.34 | 0.29 | 0.27 | 0.31 | 0.30 |
| Interference layer | 780 nm | n | 1.9 | 1.8 | 1.9 | 1.9 | 1.9 | 1.9 | 1.9 | 1.8 | 1.9 | 1.9 |
| | | k | 0.05 | 0.10 | 0.10 | 0.11 | 0.12 | 0.05 | 0.11 | 0.12 | 0.05 | 0.10 |
| | 680 nm | n | 2.1 | 1.9 | 2.0 | 2.0 | 2.1 | 2.1 | 2.0 | 2.0 | 2.1 | 2.0 |
| | | k | 0.04 | 0.08 | 0.10 | 0.10 | 0.12 | 0.04 | 0.10 | 0.11 | 0.04 | 0.10 |
| | 635 nm | n | 2.5 | 2.4 | 2.4 | 2.5 | 2.6 | 2.5 | 2.5 | 2.4 | 2.5 | 2.4 |
| | | k | 0.10 | 0.11 | 0.12 | 0.13 | 0.14 | 0.10 | 0.13 | 0.15 | 0.10 | 0.12 |
| ni × di*3 | 780 nm | | 152 | 162 | 171 | 152 | 143 | 190 | 114 | 81 | 152 | 171 |
| | 680 nm | | 168 | 171 | 180 | 160 | 158 | 210 | 120 | 90 | 168 | 180 |
| | 635 nm | | 200 | 216 | 216 | 200 | 195 | 250 | 150 | 108 | 200 | 216 |

*1 n: refractive index *2 k: attenuation coefficient

*3 refractive index × film thickness in interference layer

Table 3 (continued)

| | | | Example | | | | | | | | | |
|---|---|---|---|---|---|---|---|---|---|---|---|---|
| | | | 73 | 74 | 75 | 76 | 77 | 78 | 79 | 80 | 81 | 82 |
| Recording layer formula No. | | | c-2 | c-2 | c-2 | c-2 | b-3 | b-3 | b-3 | b-3 | b-9 | b-9 |
| Interference layer formula No. | | | 1-101 | 1-102 | 1-103 | 1-104 | 1-105 | 1-106 | 1-107 | 1-108 | 1-109 | 1-110 |
| film thickness (nm) | | | 90 | 90 | 90 | 80 | 75 | 100 | 60 | 45 | 80 | 90 |
| Optical constants | | | | | | | | | | | | |
| Recording layer | 780 nm | n*1 | 2.1 | 2.2 | 2.1 | 2.2 | 2.1 | 2.0 | 2.1 | 2.2 | 2.1 | 2.0 |
| | | k*2 | 0.07 | 0.11 | 0.07 | 0.11 | 0.09 | 0.07 | 0.11 | 0.10 | 0.07 | 0.07 |
| | 680 nm | n | 1.2 | 1.3 | 1.2 | 1.3 | 1.2 | 1.1 | 1.2 | 1.3 | 1.2 | 1.3 |
| | | k | 0.46 | 0.50 | 0.48 | 0.46 | 0.47 | 0.48 | 0.44 | 0.46 | 0.48 | 0.46 |
| | 635 nm | n | 1.1 | 1.2 | 1.1 | 1.2 | 1.2 | 1.1 | 1.2 | 1.2 | 1.1 | 1.2 |
| | | k | 0.31 | 0.31 | 0.29 | 0.29 | 0.33 | 0.34 | 0.27 | 0.28 | 0.33 | 0.30 |
| Interference layer | 780 nm | n | 1.9 | 1.8 | 1.9 | 1.9 | 1.9 | 1.9 | 1.9 | 1.8 | 1.9 | 1.9 |
| | | k | 0.10 | 0.10 | 0.10 | 0.11 | 0.12 | 0.05 | 0.11 | 0.12 | 0.05 | 0.10 |
| | 680 nm | n | 2.0 | 1.9 | 2.0 | 2.0 | 2.1 | 2.1 | 2.0 | 2.0 | 2.1 | 2.0 |
| | | k | 0.10 | 0.08 | 0.10 | 0.10 | 0.12 | 0.04 | 0.10 | 0.11 | 0.04 | 0.10 |
| | 635 nm | n | 2.4 | 2.4 | 2.4 | 2.5 | 2.6 | 2.5 | 2.5 | 2.4 | 2.5 | 2.4 |
| | | k | 0.12 | 0.11 | 0.12 | 0.13 | 0.14 | 0.10 | 0.13 | 0.15 | 0.10 | 0.12 |
| ni × di*3 | 780 nm | | 171 | 162 | 171 | 152 | 143 | 190 | 114 | 81 | 152 | 171 |
| | 680 nm | | 180 | 171 | 180 | 160 | 158 | 210 | 120 | 90 | 168 | 180 |
| | 635 nm | | 216 | 216 | 216 | 200 | 195 | 250 | 150 | 108 | 200 | 216 |

*1 n: refractive index *2 k: attenuation coefficient

*3 refractive index × film thickness in interference layer

Table 3 (continued)

| | | | Example | | | | | | | | | |
|---|---|---|---|---|---|---|---|---|---|---|---|---|
| | | | 83 | 84 | 85 | 86 | 87 | 88 | 89 | 90 | 91 | 92 |
| Recording layer formula No. | | | c-2 | c-2 | c-2 | c-2 | b-3 | b-3 | b-3 | b-3 | b-9 | b-9 |
| Interference layer formula No. | | | 1-111 | 1-112 | 1-113 | 1-114 | 1-115 | 1-116 | 1-117 | 1-118 | 1-119 | 1-120 |
| film thickness (nm) | | | 80 | 90 | 90 | 80 | 75 | 100 | 60 | 45 | 80 | 90 |
| Optical constants | | | | | | | | | | | | |
| Recording layer | 780 nm | n*1 | 2.1 | 2.3 | 2.2 | 2.1 | 2.2 | 2.1 | 2.2 | 2.3 | 2.1 | 2.1 |
| | | k*2 | 0.11 | 0.11 | 0.07 | 0.09 | 0.08 | 0.09 | 0.11 | 0.10 | 0.08 | 0.07 |
| | 680 nm | n | 1.2 | 1.3 | 1.2 | 1.3 | 1.3 | 1.2 | 1.2 | 1.1 | 1.2 | 1.3 |
| | | k | 0.46 | 0.50 | 0.46 | 0.46 | 0.50 | 0.48 | 0.45 | 0.46 | 0.48 | 0.46 |
| | 635 nm | n | 1.2 | 1.1 | 1.1 | 1.2 | 1.1 | 1.2 | 1.2 | 1.2 | 1.1 | 1.2 |
| | | k | 0.29 | 0.31 | 0.30 | 0.29 | 0.32 | 0.33 | 0.29 | 0.28 | 0.33 | 0.29 |
| Interference layer | 780 nm | n | 1.9 | 1.8 | 1.9 | 1.9 | 1.9 | 1.9 | 1.9 | 1.8 | 1.9 | 1.9 |
| | | k | 0.11 | 0.10 | 0.10 | 0.11 | 0.12 | 0.05 | 0.11 | 0.12 | 0.05 | 0.10 |
| | 680 nm | n | 2.0 | 1.9 | 2.0 | 2.0 | 2.1 | 2.1 | 2.0 | 2.0 | 2.1 | 2.0 |
| | | k | 0.10 | 0.08 | 0.10 | 0.10 | 0.12 | 0.04 | 0.10 | 0.11 | 0.04 | 0.10 |
| | 635 nm | n | 2.4 | 2.4 | 2.4 | 2.5 | 2.6 | 2.5 | 2.5 | 2.4 | 2.5 | 2.4 |
| | | k | 0.12 | 0.11 | 0.12 | 0.13 | 0.14 | 0.10 | 0.13 | 0.15 | 0.10 | 0.12 |
| ni × di*3 | 780 nm | | 152 | 162 | 171 | 152 | 143 | 190 | 114 | 81 | 152 | 171 |
| | 680 nm | | 160 | 171 | 180 | 160 | 158 | 210 | 120 | 90 | 168 | 180 |
| | 635 nm | | 200 | 216 | 216 | 200 | 195 | 250 | 150 | 108 | 200 | 216 |

*1 n: refractive index *2 k: attenuation coefficient

*3 refractive index × film thickness in interference layer

Table 3 (continued)

| | | | Example 93 | 94 | 95 | 96 | 97 | 98 | 99 | 100 |
|---|---|---|---|---|---|---|---|---|---|---|
| Recording layer formula No. | | | a-8 | a-8 | a-8 | b-2 | b-2 | b-2 | b-2 | b-2 |
| Interference layer formula No. | | | 1-121 | 1-122 | 1-123 | 1-124 | 1-125 | 1-126 | 1-127 | 1-128 |
| film thickness (nm) | | | 90 | 90 | 90 | 80 | 75 | 100 | 60 | 45 |
| Optical constants | | | | | | | | | | |
| Recording layer | 780 nm | n*1 | 2.1 | 2.2 | 2.0 | 2.2 | 2.1 | 2.2 | 2.2 | 2.3 |
| | | k*2 | 0.08 | 0.11 | 0.07 | 0.11 | 0.08 | 0.09 | 0.11 | 0.09 |
| | 680 nm | n | 1.3 | 1.2 | 1.3 | 1.2 | 1.3 | 1.2 | 1.3 | 1.2 |
| | | k | 0.48 | 0.50 | 0.47 | 0.46 | 0.49 | 0.48 | 0.45 | 0.46 |
| | 635 nm | n | 1.2 | 1.1 | 1.2 | 1.2 | 1.1 | 1.2 | 1.1 | 1.2 |
| | | k | 0.29 | 0.30 | 0.31 | 0.29 | 0.34 | 0.33 | 0.28 | 0.28 |
| Interference layer | 780 nm | n | 1.9 | 1.8 | 1.9 | 1.9 | 1.9 | 1.9 | 1.9 | 1.8 |
| | | k | 0.17 | 0.11 | 0.10 | 0.11 | 0.12 | 0.08 | 0.10 | 0.11 |
| | 680 nm | n | 2.0 | 1.9 | 2.0 | 2.0 | 2.1 | 2.1 | 2.0 | 2.0 |
| | | k | 0.10 | 0.09 | 0.11 | 0.10 | 0.12 | 0.06 | 0.12 | 0.11 |
| | 635 nm | n | 2.4 | 2.4 | 2.4 | 2.5 | 2.6 | 2.5 | 2.5 | 2.4 |
| | | k | 0.12 | 0.11 | 0.12 | 0.13 | 0.13 | 0.11 | 0.12 | 0.14 |
| ni × di*3 | 780 nm | | 171 | 162 | 171 | 152 | 143 | 190 | 114 | 81 |
| | 680 nm | | 180 | 171 | 180 | 160 | 158 | 210 | 120 | 90 |
| | 635 nm | | 216 | 216 | 216 | 200 | 195 | 250 | 150 | 108 |

*1 n: refractive index *2 k: attenuation coefficient

*3 refractive index × film thickness in interference layer

Table 3 (continued)

| | | | Example | | | | | | | | | |
|---|---|---|---|---|---|---|---|---|---|---|---|---|
| | | | 101 | 102 | 103 | 104 | 105 | 106 | 107 | 108 | 109 | 110 |
| Recording layer formula No. | | | b-3 | b-3 | b-3 | b-3 | b-3 | b-9 | b-9 | b-9 | b-9 | b-9 |
| Interference layer formula No. | | | 1-131 | 1-132 | 1-133 | 1-134 | 1-135 | 1-136 | 1-137 | 1-138 | 1-139 | 1-140 |
| film thickness (nm) | | | 80 | 90 | 90 | 80 | 75 | 100 | 60 | 45 | 80 | 90 |
| Optical constants | | | | | | | | | | | | |
| Recording layer | 780 nm | n*1 | 2.2 | 2.3 | 2.0 | 2.2 | 2.2 | 2.2 | 2.2 | 2.3 | 2.2 | 2.0 |
| | | k*2 | 0.08 | 0.12 | 0.06 | 0.10 | 0.08 | 0.08 | 0.10 | 0.11 | 0.08 | 0.06 |
| | 680 nm | n | 1.2 | 1.3 | 1.3 | 1.2 | 1.2 | 1.2 | 1.2 | 1.2 | 1.2 | 1.3 |
| | | k | 0.49 | 0.51 | 0.47 | 0.45 | 0.49 | 0.49 | 0.45 | 0.45 | 0.49 | 0.47 |
| | 635 nm | n | 1.2 | 1.2 | 1.2 | 1.1 | 1.2 | 1.2 | 1.1 | 1.1 | 1.2 | 1.2 |
| | | k | 0.34 | 0.30 | 0.30 | 0.28 | 0.34 | 0.34 | 0.28 | 0.27 | 0.34 | 0.30 |
| Interference layer | 780 nm | n | 1.9 | 1.8 | 1.9 | 1.9 | 1.9 | 1.9 | 1.9 | 1.8 | 1.9 | 1.9 |
| | | k | 0.05 | 0.10 | 0.10 | 0.11 | 0.12 | 0.05 | 0.11 | 0.12 | 0.05 | 0.10 |
| | 680 nm | n | 2.1 | 1.9 | 2.0 | 2.0 | 2.1 | 2.1 | 2.0 | 2.0 | 2.1 | 2.0 |
| | | k | 0.04 | 0.08 | 0.10 | 0.10 | 0.12 | 0.04 | 0.10 | 0.11 | 0.04 | 0.10 |
| | 635 nm | n | 2.5 | 2.4 | 2.4 | 2.5 | 2.6 | 2.5 | 2.5 | 2.4 | 2.5 | 2.4 |
| | | k | 0.10 | 0.11 | 0.12 | 0.13 | 0.14 | 0.10 | 0.13 | 0.15 | 0.10 | 0.12 |
| ni × di*3 | 780 nm | | 152 | 162 | 171 | 152 | 143 | 190 | 114 | 81 | 152 | 171 |
| | 680 nm | | 168 | 171 | 180 | 160 | 158 | 210 | 120 | 90 | 168 | 180 |
| | 635 nm | | 200 | 216 | 216 | 200 | 195 | 250 | 150 | 108 | 200 | 216 |

*1 n: refractive index *2 k: attenuation coefficient

*3 refractive index × film thickness in interference layer

Table 3 (continued)

| | | | Example | | | | | | | | | |
|---|---|---|---|---|---|---|---|---|---|---|---|---|
| | | | 111 | 112 | 113 | 114 | 115 | 116 | 117 | 118 | 119 | 120 |
| Recording layer formula No. | | | b-9 | b-9 | b-9 | a-6 | a-6 | a-6 | a-6 | a-6 | a-6 | a-6 |
| Interference layer formula No. | | | 1-141 | 1-142 | 1-143 | 1-144 | 1-145 | 1-146 | 1-147 | 1-148 | 1-149 | 1-150 |
| film thickness (nm) | | | 90 | 90 | 90 | 80 | 75 | 100 | 60 | 45 | 80 | 90 |
| Optical constants | | | | | | | | | | | | |
| Recording layer | 780 nm | n*1 | 2.0 | 2.3 | 2.0 | 2.2 | 2.2 | 2.2 | 2.2 | 2.3 | 2.2 | 2.0 |
| | | k*2 | 0.06 | 0.12 | 0.06 | 0.10 | 0.08 | 0.08 | 0.10 | 0.11 | 0.08 | 0.06 |
| | 680 nm | n | 1.3 | 1.3 | 1.3 | 1.2 | 1.2 | 1.2 | 1.2 | 1.2 | 1.2 | 1.3 |
| | | k | 0.47 | 0.51 | 0.47 | 0.45 | 0.49 | 0.49 | 0.45 | 0.45 | 0.49 | 0.47 |
| | 635 nm | n | 1.2 | 1.2 | 1.2 | 1.1 | 1.2 | 1.2 | 1.1 | 1.1 | 1.2 | 1.2 |
| | | k | 0.30 | 0.30 | 0.30 | 0.28 | 0.34 | 0.34 | 0.28 | 0.27 | 0.34 | 0.30 |
| Interference layer | 780 nm | n | 1.9 | 1.8 | 1.9 | 1.9 | 1.9 | 1.9 | 1.9 | 1.8 | 1.9 | 1.9 |
| | | k | 0.10 | 0.10 | 0.10 | 0.11 | 0.12 | 0.05 | 0.11 | 0.12 | 0.05 | 0.10 |
| | 680 nm | n | 2.0 | 1.9 | 2.0 | 2.0 | 2.1 | 2.1 | 2.0 | 2.0 | 2.1 | 2.0 |
| | | k | 0.10 | 0.08 | 0.10 | 0.10 | 0.12 | 0.04 | 0.10 | 0.11 | 0.04 | 0.10 |
| | 635 nm | n | 2.4 | 2.4 | 2.4 | 2.5 | 2.6 | 2.5 | 2.5 | 2.4 | 2.5 | 2.4 |
| | | k | 0.12 | 0.11 | 0.12 | 0.13 | 0.14 | 0.10 | 0.13 | 0.15 | 0.10 | 0.12 |
| ni × di*3 | 780 nm | | 171 | 162 | 171 | 152 | 143 | 190 | 114 | 81 | 152 | 171 |
| | 680 nm | | 180 | 171 | 180 | 160 | 158 | 210 | 120 | 90 | 168 | 180 |
| | 635 nm | | 216 | 216 | 216 | 200 | 195 | 250 | 150 | 108 | 200 | 216 |

*1 n: refractive index *2 k: attenuation coefficient

*3 refractive index × film thickness in interference layer

Table 3 (continued)

| | | | Example | | | | | | | | | |
|---|---|---|---|---|---|---|---|---|---|---|---|---|
| | | | 121 | 122 | 123 | 124 | 125 | 126 | 127 | 128 | 129 | 130 |
| Recording layer | formula No. | | a-6 | a-6 | a-6 | a-8 | a-8 | a-8 | a-8 | a-8 | a-8 | b-2 |
| Interference layer | formula No. | | 1-151 | 1-152 | 1-153 | 1-154 | 1-155 | 1-156 | 1-157 | 1-158 | 1-159 | 1-160 |
| | film thickness (nm) | | 80 | 90 | 90 | 80 | 75 | 100 | 60 | 45 | 80 | 90 |
| Optical constants | | | | | | | | | | | | |
| Recording layer | 780 nm | n*1 | 2.2 | 2.3 | 2.0 | 2.2 | 2.2 | 2.2 | 2.2 | 2.3 | 2.2 | 2.0 |
| | | k*2 | 0.10 | 0.12 | 0.06 | 0.10 | 0.08 | 0.08 | 0.10 | 0.11 | 0.08 | 0.06 |
| | 680 nm | n | 1.2 | 1.3 | 1.3 | 1.2 | 1.2 | 1.2 | 1.2 | 1.2 | 1.2 | 1.3 |
| | | k | 0.45 | 0.51 | 0.47 | 0.45 | 0.49 | 0.49 | 0.45 | 0.45 | 0.49 | 0.47 |
| | 635 nm | n | 1.1 | 1.2 | 1.2 | 1.1 | 1.2 | 1.2 | 1.1 | 1.1 | 1.2 | 1.2 |
| | | k | 0.28 | 0.30 | 0.30 | 0.28 | 0.34 | 0.34 | 0.28 | 0.27 | 0.34 | 0.30 |
| Interference layer | 780 nm | n | 1.9 | 1.8 | 1.9 | 1.9 | 1.9 | 1.9 | 1.9 | 1.8 | 1.9 | 1.9 |
| | | k | 0.11 | 0.10 | 0.10 | 0.11 | 0.12 | 0.05 | 0.11 | 0.12 | 0.05 | 0.10 |
| | 680 nm | n | 2.0 | 1.9 | 2.0 | 2.0 | 2.1 | 2.1 | 2.0 | 2.0 | 2.1 | 2.0 |
| | | k | 0.10 | 0.08 | 0.10 | 0.10 | 0.12 | 0.04 | 0.10 | 0.11 | 0.04 | 0.10 |
| | 635 nm | n | 2.5 | 2.4 | 2.4 | 2.5 | 2.6 | 2.5 | 2.5 | 2.4 | 2.5 | 2.4 |
| | | k | 0.13 | 0.11 | 0.12 | 0.13 | 0.14 | 0.10 | 0.13 | 0.15 | 0.10 | 0.12 |
| ni x di*3 | 780 nm | | 152 | 162 | 171 | 152 | 143 | 190 | 114 | 81 | 152 | 171 |
| | 680 nm | | 160 | 171 | 180 | 160 | 158 | 210 | 120 | 90 | 168 | 180 |
| | 635 nm | | 200 | 216 | 216 | 200 | 195 | 250 | 150 | 108 | 200 | 216 |

*1 n: refractive index *2 k: attenuation coefficient

*3 refractive index × film thickness in interference layer

Table 3 (continued)

| | | | Example 131 | Example 132 | Example 133 |
|---|---|---|---|---|---|
| Recording layer formula No. | | | b-2 | b-2 | b-2 |
| Interference layer formula No. | | | 1-161 | 1-162 | 1-163 |
| film thickness (nm) | | | 90 | 90 | 90 |
| Optical constants | | | | | |
| Recording layer | 780 nm | n*1 | 2.0 | 2.3 | 2.0 |
| | | k*2 | 0.06 | 0.12 | 0.06 |
| | 680 nm | n | 1.3 | 1.3 | 1.3 |
| | | k | 0.47 | 0.51 | 0.47 |
| | 635 nm | n | 1.2 | 1.2 | 1.2 |
| | | k | 0.30 | 0.30 | 0.30 |
| Interference layer | 780 nm | n | 1.9 | 1.8 | 1.9 |
| | | k | 0.10 | 0.11 | 0.10 |
| | 680 nm | n | 2.0 | 1.9 | 2.0 |
| | | k | 0.10 | 0.08 | 0.10 |
| | 635 nm | n | 2.4 | 2.4 | 2.4 |
| | | k | 0.12 | 0.11 | 0.12 |
| ni x di*3 | 780 nm | | 171 | 162 | 171 |
| | 680 nm | | 180 | 171 | 180 |
| | 635 nm | | 216 | 216 | 216 |

*1 n: refractive index *2 k: attenuation coefficient
*3 refractive index x film thickness in interference layer

Comparative Example 1:

An optical recording medium was prepared in the same manner as that in Example 55, except that the thickness of the optical interference layer comprising the azo compound was changed to 35 nm. The products (ni × di) of the refractive indices and the film thickness of the optical interference layer at 780, 680 and 635 nm were 67, 74 and 88, respectively.

The medium thus prepared was evaluated in the same manner as that described in Example 55 to find that the reproducing signal wave forms were distorted at the respective wavelengths of 680 and 635 nm, and the reflectance was low.

Comparative Example 2:

An optical recording medium was prepared in the same manner as that described in Example 59, except that the thickness of the optical interference layer comprising the azo compound was changed to 160 nm. The products (ni × di) of the refractive indices and the film thickness of the optical interference layer at 780, 680 and 635 nm were 304, 336 and 400, respectively.

The medium thus prepared was evaluated in the same manner as that in Example 59 to find that the reproducing signal wave forms were distorted at the respective wavelengths of 786, 680 and 635 nm, and the reflectance was low as well.

Comparative Example 3:

An optical recording medium was prepared in the same manner as that described in Example 49, except that only the metal complex (1-93) of the azo compound described in Table-1 was used in the dye layer.

The medium thus prepared was evaluated in the same manner as that in Example 49 to find that recording could not be carried out at 780 nm and the sensitivity was low at 680 nm, which therefore made fine recording impossible.

Comparative Example 4:

An optical recording medium was prepared in the same manner as that described in Example 49, except that only the phthalocyanine compound (a-10) represented by the chemical formula described previously was used in the dye layer.

The medium thus prepared was evaluated in the same manner as that in Example 49 to find that the wave form was distorted and the reflectances at 635 and 680 nm were low.

Described in Table-4 together are the reproducing signal characteristics [reflectance (%), error rate (cps) and modulation degree (I3/Itop)] at 786, 680 and 635 nm when the respective media described above were recorded at 780 and 680 nm, respectively.

Table 4

| | Example | 49 | 50 | 51 | 52 | 53 | 54 | 55 | 56 | 57 | 58 |
|---|---|---|---|---|---|---|---|---|---|---|---|
| 680 nm recording | 786 nm reproduction | | | | | | | | | | |
| | Reflectance (%) | 68 | 68 | 70 | 70 | 69 | 70 | 69 | 67 | 69 | 66 |
| | Error rate (cps) | 9 | 7 | 7 | 8 | 7 | 7 | 6 | <5 | 6 | <5 |
| | I3/Itop | 0.41 | 0.43 | 0.42 | 0.42 | 0.41 | 0.41 | 0.43 | 0.41 | 0.41 | 0.40 |
| | 680 nm reproduction | | | | | | | | | | |
| | Reflectance (%) | 27 | 28 | 27 | 27 | 28 | 25 | 26 | 24 | 26 | 21 |
| | Error rate (cps) | 9 | 7 | 7 | 10 | 7 | 7 | 9 | <5 | 10 | <5 |
| | I3/Itop | 0.38 | 0.40 | 0.39 | 0.38 | 0.40 | 0.39 | 0.42 | 0.40 | 0.42 | 0.40 |
| | 635 nm reproduction | | | | | | | | | | |
| | Reflectance (%) | 33 | 31 | 32 | 33 | 31 | 32 | 32 | 32 | 32 | 32 |
| | Error rate (cps) | 7 | 6 | 6 | 7 | 5 | 5 | 9 | 7 | 10 | 7 |
| | I3/Itop | 0.44 | 0.46 | 0.46 | 0.45 | 0.47 | 0.46 | 0.45 | 0.44 | 0.45 | 0.44 |
| 780 nm recording | 786 nm reproduction | | | | | | | | | | |
| | Reflectance (%) | 70 | 69 | 68 | 71 | 68 | 67 | 69 | 70 | 69 | 70 |
| | Error rate (cps) | 6 | 7 | 6 | 6 | 7 | 6 | 10 | 6 | 10 | 5 |
| | I3/Itop | 0.45 | 0.43 | 0.44 | 0.45 | 0.43 | 0.44 | 0.44 | 0.43 | 0.44 | 0.43 |
| | 680 nm reproduction | | | | | | | | | | |
| | Reflectance (%) | 28 | 27 | 27 | 28 | 27 | 27 | 30 | 29 | 30 | 29 |
| | Error rate (cps) | 9 | 10 | 9 | 9 | 10 | 9 | 8 | 9 | 8 | 9 |
| | I3/Itop | 0.39 | 0.46 | 0.41 | 0.39 | 0.46 | 0.41 | 0.38 | 0.45 | 0.38 | 0.45 |
| | 635 nm reproduction | | | | | | | | | | |
| | Reflectance (%) | 35 | 33 | 32 | 35 | 33 | 32 | 33 | 34 | 33 | 34 |
| | Error rate (cps) | 8 | 9 | 6 | 8 | 9 | 7 | 7 | <5 | 7 | <5 |
| | I3/Itop | 0.45 | 0.47 | 0.46 | 0.44 | 0.47 | 0.45 | 0.45 | 0.43 | 0.45 | 0.43 |

Table 4 (continued)

| | Example | 59 | 60 | 61 | 62 | 63 | 64 | 65 |
|---|---|---|---|---|---|---|---|---|
| 680 nm recording | 786 nm reproduction | | | | | | | |
| | Reflectance (%) | 69 | 70 | 69 | 70 | 68 | 70 | 68 |
| | Error rate (cps) | 8 | <5 | <5 | <5 | 7 | <5 | 6 |
| | I3/Itop | 0.45 | 0.45 | 0.45 | 0.45 | 0.42 | 0.45 | 0.40 |
| | 680 nm reproduction | | | | | | | |
| | Reflectance (%) | 25 | 31 | 25 | 33 | 27 | 28 | 26 |
| | Error rate (cps) | 8 | 7 | <5 | <5 | <5 | 9 | 8 |
| | I3/Itop | 0.37 | 0.45 | 0.37 | 0.45 | 0.46 | 0.39 | 0.43 |
| | 635 nm reproduction | | | | | | | |
| | Reflectance (%) | 32 | 29 | 25 | 28 | 30 | 32 | 28 |
| | Error rate (cps) | 9 | 7 | 10 | 7 | <5 | <5 | 6 |
| | I3/Itop | 0.43 | 0.44 | 0.43 | 0.43 | 0.46 | 0.44 | 0.45 |
| 780 nm recording | 786 nm reproduction | | | | | | | |
| | Reflectance (%) | 68 | 69 | 68 | 66 | 68 | 70 | 69 |
| | Error rate (cps) | 7 | <5 | 5 | <5 | 6 | 6 | 8 |
| | I3/Itop | 0.46 | 0.47 | 0.46 | 0.47 | 0.43 | 0.46 | 0.47 |
| | 680 nm reproduction | | | | | | | |
| | Reflectance (%) | 31 | 28 | 31 | 28 | 27 | 28 | 30 |
| | Error rate (cps) | 9 | 8 | 9 | 8 | 5 | 9 | 7 |
| | I3/Itop | 0.40 | 0.41 | 0.40 | 0.41 | 0.44 | 0.45 | 0.42 |
| | 635 nm reproduction | | | | | | | |
| | Reflectance (%) | 31 | 33 | 31 | 33 | 31 | 30 | 31 |
| | Error rate (cps) | 7 | <5 | 7 | <5 | 6 | 9 | 8 |
| | I3/Itop | 0.46 | 0.46 | 0.46 | 0.45 | 0.45 | 0.46 | 0.45 |

Table 4 (continued)

| | Example | 66 | 67 | 68 | 69 | 70 | 71 | 72 | 73 | 74 | 75 |
|---|---|---|---|---|---|---|---|---|---|---|---|
| 680 nm recording | 786 nm reproduction | | | | | | | | | | |
| | Reflectance (%) | 70 | 69 | 70 | 69 | 70 | 69 | 70 | 68 | 69 | 69 |
| | Error rate (cps) | 7 | 8 | 6 | 7 | 6 | <5 | 8 | 6 | <5 | 6 |
| | I3/Itop | 0.42 | 0.41 | 0.41 | 0.41 | 0.45 | 0.40 | 0.45 | 0.42 | 0.45 | 0.40 |
| | 680 nm reproduction | | | | | | | | | | |
| | Reflectance (%) | 27 | 28 | 27 | 30 | 26 | 28 | 31 | 26 | 28 | 28 |
| | Error rate (cps) | 9 | 7 | 7 | 9 | 7 | 8 | <5 | 8 | 10 | 8 |
| | I3/Itop | 0.39 | 0.41 | 0.39 | 0.44 | 0.38 | 0.38 | 0.43 | 0.45 | 0.41 | 0.42 |
| | 635 nm reproduction | | | | | | | | | | |
| | Reflectance (%) | 32 | 31 | 32 | 31 | 29 | 30 | 29 | 29 | 31 | 28 |
| | Error rate (cps) | 7 | 5 | 5 | 8 | 9 | 8 | 7 | 5 | <5 | 6 |
| | I3/Itop | 0.46 | 0.45 | 0.44 | 0.45 | 0.46 | 0.47 | 0.43 | 0.45 | 0.44 | 0.45 |
| 780 nm recording | 786 nm reproduction | | | | | | | | | | |
| | Reflectance (%) | 70 | 69 | 68 | 68 | 69 | 71 | 66 | 69 | 70 | 69 |
| | Error rate (cps) | 6 | 7 | 7 | 9 | 6 | 5 | 9 | 7 | 8 | 8 |
| | I3/Itop | 0.44 | 0.43 | 0.44 | 0.44 | 0.45 | 0.43 | 0.47 | 0.43 | 0.46 | 0.47 |
| | 680 nm reproduction | | | | | | | | | | |
| | Reflectance (%) | 29 | 27 | 29 | 30 | 31 | 29 | 29 | 27 | 28 | 30 |
| | Error rate (cps) | 9 | 10 | 9 | 8 | 9 | 9 | 8 | 5 | 10 | 7 |
| | I3/Itop | 0.39 | 0.46 | 0.41 | 0.38 | 0.41 | 0.45 | 0.41 | 0.44 | 0.45 | 0.42 |
| | 635 nm reproduction | | | | | | | | | | |
| | Reflectance (%) | 34 | 32 | 31 | 34 | 32 | 34 | 33 | 31 | 30 | 31 |
| | Error rate (cps) | 8 | 9 | 8 | 7 | 7 | <5 | <5 | 6 | 9 | 8 |
| | I3/Itop | 0.46 | 0.47 | 0.44 | 0.45 | 0.46 | 0.43 | 0.45 | 0.44 | 0.45 | 0.45 |

Table 4 (continued)

| | Example | 76 | 77 | 78 | 79 | 80 | 81 | 82 | 83 | 84 | 85 |
|---|---|---|---|---|---|---|---|---|---|---|---|
| 680 nm recording | 786 nm reproduction | | | | | | | | | | |
| | Reflectance (%) | 69 | 69 | 71 | 69 | 68 | 67 | 66 | 68 | 69 | 69 |
| | Error rate (cps) | 7 | 8 | 6 | 7 | 6 | <5 | 8 | 6 | <5 | 6 |
| | I3/Itop | 0.41 | 0.42 | 0.41 | 0.42 | 0.41 | 0.42 | 0.43 | 0.42 | 0.44 | 0.40 |
| | 680 nm reproduction | | | | | | | | | | |
| | Reflectance (%) | 28 | 28 | 26 | 30 | 28 | 29 | 30 | 27 | 29 | 28 |
| | Error rate (cps) | 8 | 7 | 7 | 9 | 8 | 8 | <5 | 8 | 9 | 9 |
| | I3/Itop | 0.39 | 0.40 | 0.38 | 0.43 | 0.39 | 0.39 | 0.41 | 0.44 | 0.42 | 0.41 |
| | 635 nm reproduction | | | | | | | | | | |
| | Reflectance (%) | 32 | 31 | 31 | 31 | 28 | 30 | 28 | 29 | 30 | 28 |
| | Error rate (cps) | 7 | 5 | 5 | 8 | 9 | 8 | 7 | 5 | <5 | 6 |
| | I3/Itop | 0.45 | 0.47 | 0.44 | 0.46 | 0.45 | 0.46 | 0.44 | 0.43 | 0.44 | 0.44 |
| 780 nm recording | 786 nm reproduction | | | | | | | | | | |
| | Reflectance (%) | 69 | 69 | 69 | 67 | 70 | 70 | 67 | 69 | 70 | 69 |
| | Error rate (cps) | 6 | 7 | 7 | 9 | 6 | 8 | 9 | 7 | 8 | 8 |
| | I3/Itop | 0.43 | 0.43 | 0.45 | 0.46 | 0.45 | 0.44 | 0.43 | 0.42 | 0.43 | 0.44 |
| | 680 nm reproduction | | | | | | | | | | |
| | Reflectance (%) | 29 | 28 | 27 | 30 | 31 | 30 | 29 | 28 | 27 | 30 |
| | Error rate (cps) | 9 | 8 | 9 | 8 | 9 | 9 | 8 | 6 | 9 | 7 |
| | I3/Itop | 0.39 | 0.45 | 0.42 | 0.39 | 0.41 | 0.44 | 0.42 | 0.43 | 0.44 | 0.42 |
| | 635 nm reproduction | | | | | | | | | | |
| | Reflectance (%) | 34 | 33 | 32 | 31 | 32 | 33 | 33 | 31 | 30 | 31 |
| | Error rate (cps) | 8 | 9 | 8 | 7 | 7 | <5 | <5 | 6 | 9 | 8 |
| | I3/Itop | 0.45 | 0.46 | 0.45 | 0.44 | 0.46 | 0.43 | 0.46 | 0.45 | 0.46 | 0.45 |

Table 4 (continued)

| | Example | 86 | 87 | 88 | 89 | 90 | 91 | 92 | 93 | 94 | 95 |
|---|---|---|---|---|---|---|---|---|---|---|---|
| 680 nm recording | 786 nm reproduction | | | | | | | | | | |
| | Reflectance (%) | 69 | 69 | 70 | 69 | 69 | 69 | 70 | 68 | 70 | 68 |
| | Error rate (cps) | 9 | 8 | 7 | 6 | 7 | <5 | <5 | 7 | <5 | 6 |
| | I3/Itop | 0.42 | 0.43 | 0.43 | 0.44 | 0.45 | 0.42 | 0.44 | 0.43 | 0.45 | 0.40 |
| | 680 nm reproduction | | | | | | | | | | |
| | Reflectance (%) | 28 | 28 | 27 | 26 | 27 | 25 | 30 | 27 | 28 | 29 |
| | Error rate (cps) | 9 | 8 | 7 | 9 | 8 | <5 | 7 | <5 | 9 | 8 |
| | I3/Itop | 0.39 | 0.41 | 0.42 | 0.41 | 0.39 | 0.40 | 0.43 | 0.44 | 0.40 | 0.42 |
| | 635 nm reproduction | | | | | | | | | | |
| | Reflectance (%) | 32 | 31 | 31 | 30 | 30 | 31 | 29 | 30 | 31 | 29 |
| | Error rate (cps) | 8 | 8 | 7 | 9 | 9 | 7 | 8 | <5 | <5 | 6 |
| | I3/Itop | 0.44 | 0.45 | 0.46 | 0.42 | 0.43 | 0.43 | 0.44 | 0.44 | 0.44 | 0.45 |
| 780 nm recording | 786 nm reproduction | | | | | | | | | | |
| | Reflectance (%) | 68 | 69 | 69 | 69 | 68 | 70 | 69 | 68 | 69 | 69 |
| | Error rate (cps) | 8 | 7 | 7 | 9 | 7 | 6 | <5 | 7 | 6 | 8 |
| | I3/Itop | 0.43 | 0.44 | 0.45 | 0.44 | 0.43 | 0.43 | 0.45 | 0.42 | 0.44 | 0.44 |
| | 680 nm reproduction | | | | | | | | | | |
| | Reflectance (%) | 29 | 29 | 28 | 30 | 30 | 28 | 27 | 27 | 28 | 31 |
| | Error rate (cps) | 7 | 8 | 9 | 7 | 9 | 6 | 8 | 5 | 9 | 7 |
| | I3/Itop | 0.39 | 0.40 | 0.42 | 0.39 | 0.41 | 0.43 | 0.41 | 0.42 | 0.41 | 0.42 |
| | 635 nm reproduction | | | | | | | | | | |
| | Reflectance (%) | 34 | 30 | 31 | 32 | 30 | 29 | 32 | 31 | 30 | 31 |
| | Error rate (cps) | 6 | 6 | 6 | 8 | 7 | <5 | <5 | 6 | 9 | 7 |
| | I3/Itop | 0.44 | 0.43 | 0.46 | 0.45 | 0.46 | 0.43 | 0.45 | 0.44 | 0.45 | 0.45 |

Table 4 (continued)

| | Example | 96 | 97 | 98 | 99 | 100 | 101 | 102 | 103 |
|---|---|---|---|---|---|---|---|---|---|
| 680 nm recording | 786 nm reproduction | | | | | | | | |
| | Reflectance (%) | 68 | 69 | 70 | 69 | 69 | 67 | 69 | 66 |
| | Error rate (cps) | 9 | 7 | 7 | 6 | 8 | <5 | <5 | 6 |
| | I3/Itop | 0.41 | 0.43 | 0.42 | 0.43 | 0.45 | 0.42 | 0.45 | 0.40 |
| | 680 nm reproduction | | | | | | | | |
| | Reflectance (%) | 27 | 28 | 28 | 26 | 25 | 26 | 28 | 21 |
| | Error rate (cps) | 6 | 7 | 7 | 9 | 8 | <5 | 10 | 8 |
| | I3/Itop | 0.38 | 0.40 | 0.39 | 0.42 | 0.37 | 0.46 | 0.39 | 0.43 |
| | 635 nm reproduction | | | | | | | | |
| | Reflectance (%) | 31 | 32 | 31 | 32 | 32 | 30 | 32 | 28 |
| | Error rate (cps) | 7 | 6 | 6 | 9 | 9 | <5 | <5 | 6 |
| | I3/Itop | 0.44 | 0.45 | 0.46 | 0.45 | 0.43 | 0.46 | 0.44 | 0.45 |
| 780 nm recording | 786 nm reproduction | | | | | | | | |
| | Reflectance (%) | 69 | 69 | 68 | 69 | 68 | 68 | 70 | 69 |
| | Error rate (cps) | 6 | 7 | 6 | 9 | 7 | 6 | 6 | 8 |
| | I3/Itop | 0.44 | 0.43 | 0.44 | 0.44 | 0.46 | 0.43 | 0.46 | 0.47 |
| | 680 nm reproduction | | | | | | | | |
| | Reflectance (%) | 29 | 27 | 28 | 30 | 31 | 27 | 28 | 30 |
| | Error rate (cps) | 9 | 9 | 9 | 8 | 9 | 5 | 10 | 7 |
| | I3/Itop | 0.39 | 0.44 | 0.41 | 0.39 | 0.49 | 0.44 | 0.45 | 0.42 |
| | 635 nm reproduction | | | | | | | | |
| | Reflectance (%) | 34 | 32 | 32 | 33 | 31 | 31 | 30 | 31 |
| | Error rate (cps) | 9 | 9 | 6 | 7 | 7 | <5 | 6 | 10 |
| | I3/Itop | 0.44 | 0.46 | 0.46 | 0.45 | 0.46 | 0.44 | 0.46 | 0.45 |

Table 4 (continued)

| | Example | 104 | 105 | 106 | 107 | 108 | 109 | 110 | 111 | 112 | 113 |
|---|---|---|---|---|---|---|---|---|---|---|---|
| 680 nm recording | 786 nm reproduction | | | | | | | | | | |
| | Reflectance (%) | 71 | 69 | 71 | 69 | 70 | 69 | 70 | 68 | 69 | 69 |
| | Error rate (cps) | 5 | 8 | 6 | 6 | <5 | <5 | <5 | 6 | <5 | 6 |
| | I3/Itop | 0.42 | 0.41 | 0.41 | 0.41 | 0.45 | 0.40 | 0.45 | 0.42 | 0.45 | 0.40 |
| | 680 nm reproduction | | | | | | | | | | |
| | Reflectance (%) | 27 | 28 | 25 | 30 | 25 | 21 | 31 | 26 | 28 | 23 |
| | Error rate (cps) | 10 | 7 | 7 | 10 | 7 | 8 | <5 | 5 | 10 | 8 |
| | I3/Itop | 0.38 | 0.40 | 0.39 | 0.42 | 0.37 | 0.40 | 0.45 | 0.46 | 0.39 | 0.43 |
| | 635 nm reproduction | | | | | | | | | | |
| | Reflectance (%) | 33 | 31 | 32 | 31 | 25 | 31 | 28 | 29 | 32 | 28 |
| | Error rate (cps) | 7 | 5 | 5 | 10 | 9 | 8 | 7 | 5 | <5 | 6 |
| | I3/Itop | 0.45 | 0.47 | 0.46 | 0.45 | 0.43 | 0.44 | 0.43 | 0.46 | 0.44 | 0.45 |
| 780 nm recording | 786 nm reproduction | | | | | | | | | | |
| | Reflectance (%) | 73 | 68 | 67 | 69 | 68 | 70 | 65 | 68 | 70 | 69 |
| | Error rate (cps) | 6 | 7 | 7 | 10 | 6 | 5 | 10 | 7 | 6 | 8 |
| | I3/Itop | 0.44 | 0.43 | 0.44 | 0.44 | 0.45 | 0.43 | 0.47 | 0.43 | 0.46 | 0.47 |
| | 680 nm reproduction | | | | | | | | | | |
| | Reflectance (%) | 29 | 27 | 29 | 30 | 31 | 29 | 29 | 27 | 28 | 30 |
| | Error rate (cps) | 9 | 10 | 9 | 8 | 9 | 9 | 8 | 5 | 10 | 7 |
| | I3/Itop | 0.39 | 0.46 | 0.41 | 0.38 | 0.41 | 0.45 | 0.41 | 0.44 | 0.45 | 0.42 |
| | 635 nm reproduction | | | | | | | | | | |
| | Reflectance (%) | 35 | 33 | 31 | 33 | 31 | 34 | 33 | 31 | 30 | 31 |
| | Error rate (cps) | 8 | 9 | 8 | 7 | 7 | <5 | <5 | 6 | 10 | 8 |
| | I3/Itop | 0.44 | 0.47 | 0.44 | 0.45 | 0.45 | 0.43 | 0.45 | 0.44 | 0.46 | 0.45 |

## Claims

1. An optical recording medium comprising at least a dye layer, a reflective layer and a protective layer provided on a substrate, wherein an azo compound represented by the following Formula (1) or a metal complex thereof having an absorption maximum at a wavelength falling in a range of 450 to 630 nm and a phthalocyanine compound represented by the following Formula (2) having an absorption maximum at a wavelength falling in a range of 680 to 900 nm are contained in said dye layer:

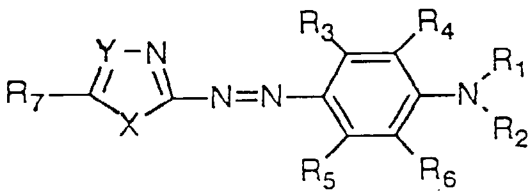

(1)

wherein $R_1$ and $R_2$ represent independently a hydrogen atom, an alkyl group having 1 to 15 carbon atoms, an aryl group having 6 to 21 carbon atoms, an aralkyl group having 7 to 22 carbon atoms, or an alkenyl group having 2 to 16 carbon atoms;
$R_3$, $R_4$, $R_5$ and $R_6$ represent independently a hydrogen atom, a halogen atom, a hydroxyl group, a carboxyl group, a sulfonic acid group, a sulfonamide group, an amino group, an alkyl group having 1 to 15 carbon atoms, an alkoxyl group having 1 to 15 carbon atoms, an aryl group having 6 to 21 carbon atoms, an acyl group having 1 to 15 carbon atoms, an alkylcarboxyl group having 2 to 16 carbon atoms, an aralkyl group having 2 to 22 carbon atoms, an alkylcarbonylamino group having 2 to 16 carbon atoms, an alkylsulfoamino group having 1 to 15 carbon atoms, an alkylamino group having 1 to 15 carbon atoms, an alkylsulfonyl group having 1 to 15 carbon atoms, or an alkenyl group having 2 to 16 carbon atoms;
$R_1$ and $R_4$, $R_2$ and $R_6$, and $R_1$ and $R_2$ may form rings ; $R_7$ represents a hydrogen atom, a halogen atom, a hydroxyl group, a carboxyl group, a sulfonic acid group, a sulfonamide group, an amino group, an alkyl group having 1 to 15 carbon atoms, an alkoxyl group having 1 to 15 carbon atoms, an aryl group having 6 to 21 carbon atoms, an acyl group having 1 to 15 carbon atoms, an alkylcarboxyl group having 2 to 16 carbon atoms, an aralkyl group having 7 to 22 carbon atoms, an alkylcarbonylamino group having 2 to 16 carbon atoms, an alkylsulfoamino group having 1 to 15 carbon atoms, an alkylamino group having 1 to 15 carbon atoms, an alkylsulfonyl group having 1 to 15 carbon atoms, an alkenyl group having 2 to 16 carbon atoms, a cyano group, a nitro group, a mercapto group, a thiocyano group, a chlorosulfonic acid group, an alkylthio group having 1 to 15 carbon atoms, an alkylazomethine group having 2 to 16 carbon atoms, or an alkylaminosulfonyl group having 1 to 15 carbon atoms; X represents a sulfur atom or N-$R_8$, wherein $R_8$ represents a hydrogen atom, an alkyl group having 1 to 15 carbon atoms, an aryl group having 6 to 21 carbon atoms, an aralkyl group having 7 to 22 carbon atoms, or an alkenyl group having 2 to 16 carbon atoms; Y represents a nitrogen atom or C-$R_9$, wherein $R_9$ is synonymous with those described in $R_7$; provided that when X is a sulfur atom, Y is a nitrogen atom, and when X is N-$R_8$, Y is C-$R_9$:

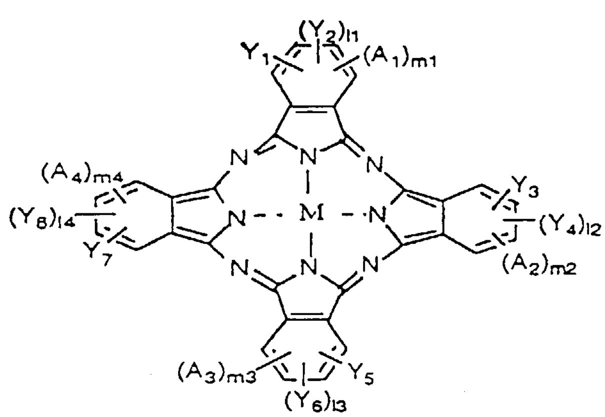

(2)

wherein $Y_1$, $Y_2$, $Y_3$, $Y_4$, $Y_5$, $Y_6$, $Y_7$, and $Y_8$ represent independently a hydrogen atom, a hydrocarbon group having

1 to 20 carbon atoms, an alkoxyl group having 1 to 20 carbon atoms, or an alkylthio group having 1 to 20 carbon atoms; in the respective combinations of $Y_1$ and $Y_2$, $Y_3$ and $Y_4$, $Y_5$ and $Y_6$ and $Y_7$ and $Y_8$, they may be combined to form rings when they are adjacent to each other; $A_1$, $A_2$, $A_3$ and $A_4$ represent independently a halogen atom or a nitro group; $l_1$, $l_2$, $l_3$ and $l_4$ represent an integer of 0 to 3; $m_1$, $m_2$, $m_3$ and $m_4$ represent an integer of 0 to 3; and M represent two hydrogen atoms, a divalent metal atom, a trivalent or tetravalent substituted metal atom, or an oxy metal.

**2.** The optical recording medium as claimed in claim 1, wherein the compound contained in the dye layer and having an absorption maximum at a wavelength falling in a range of 450 to 630 nm is a metal complex of an azo compound represented by the following Formula (3):

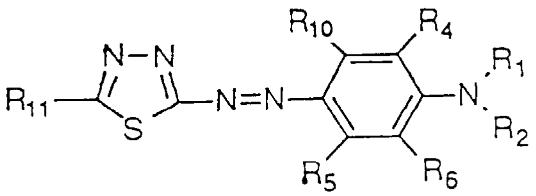

(3)

wherein $R_1$, $R_2$, $R_4$, $R_5$, and $R_6$ are synonymous with those described in Formula (1); $R_{10}$ represents a hydroxyl group or a carboxyl group; and $R_{11}$ represents a hydrogen atom or a halogen atom.

**3.** The optical recording medium as claimed in claim 1, wherein the dye layer comprises a single layer structure containing a mixture of the azo compound represented by Formula (1) or the metal complex thereof having an absorption maximum at a wavelength falling in a range of 450 to 630 nm and the phthalocyanine compound represented by Formula (2) having an absorption maximum at a wavelength falling in a range of 680 to 900 nm.

**4.** The optical recording medium as claimed in claim 1, wherein the dye layer comprises a two-layer structure of an optical interference layer containing the azo compound represented by Formula (1) or the metal complex thereof having an absorption maximum at a wavelength falling in a range of 450 to 630 nm and a recording layer containing the phthalocyanine compound represented by Formula (2) having an absorption maximum at a wavelength falling in a range of 680 to 900 nm.

**5.** The optical recording medium as claimed in claim 4, wherein an equation of $70 \leq ni \times di \leq 300$ applies to light -having a wavelength used for recording and reproducing, wherein ni represents a real part of a complex refractive index and di represents a layer thickness in the optical interference layer.

**6.** The optical recording medium as claimed in any of claims 1 to 5, capable of recording and/or reproducing with a laser beam having a wavelength $\lambda_1$ selected from wavelengths falling in a range of 770 to 830 nm and capable of recording and/or reproducing as well with a laser beam having a wavelength $\lambda_2$ selected from wavelengths falling in a range of 620 to 690 nm.

**7.** The optical recording medium as claimed in claim 6, capable of reproducing with a laser beam having the wavelength $\lambda_2$.

**8.** The optical recording medium as claimed in claim 6 or 7, wherein the laser beam having the wavelength $\lambda_1$ has a reflectance of 65 % or more, and the laser beam having the wavelength $\lambda_2$ has a reflectance of 15 % or more, which are measured through the substrate.

**9.** The optical recording medium as claimed in claim 8, wherein the laser beam having the wavelength $\lambda_2$ has a reflectance of 20 % or more, which is measured through the substrate.

**10.** A metal complex of an azo compound represented by Formula (4).

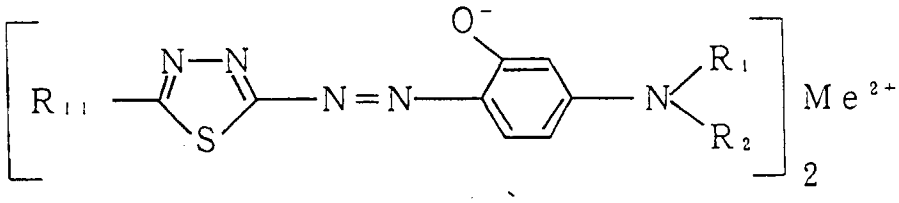

(4)

wherein $R_1$ and $R_2$ represent independently a hydrogen atom, an alkyl group having 1 to 15 carbon atoms, an aryl group having 6 to 21 carbon atoms, an aralkyl group having 7 to 22 carbon atoms, or an alkenyl group 2 to 16 carbon atoms; $R_{11}$ represents a hydrogen atom or a halogen atom; Me represents nickel, cobalt, copper, palladium, iron and zinc.

## Patentansprüche

1. Optisches Aufzeichnungsmedium, umfassend zumindest eine Farbschicht, eine reflektierende Schicht und eine auf einem Substrat angeordnete Schutzschicht, worin eine Azoverbindung der folgenden Formel (1) oder ein Metallkomplex hiervon mit einem Absorptionsmaximum bei einer Wellenlänge im Bereich von 450 bis 630 nm und eine Phthalocyaninverbindung der folgenden Formel (2) mit einem Absorptionsmaximum bei einer Wellenlänge im Bereich von 680 bis 900 nm in der Farbschicht enthalten sind:

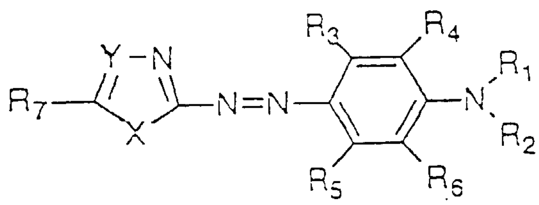

(1)

worin

$R_1$ und $R_2$ unabhängig ein Wasserstoffatom, eine Alkylgruppe mit 1 bis 15 Kohlenstoffatomen, eine Arylgruppe mit 6 bis 21 Kohlenstoffatomen, eine Aralkylgruppe mit 7 bis 22 Kohlenstoffatomen oder eine Alkenylgruppe mit 2 bis 16 Kohlenstoffatomen bedeuten;

$R_3$, $R_4$, $R_5$ und $R_6$ unabhängig ein Wasserstoffatom, ein Halogenatom, eine Hydroxylgruppe, eine Carboxylgruppe, eine Sulfonsäuregruppe, eine Sulfonamidgruppe, eine Aminogruppe, eine Alkylgruppe mit 1 bis 15 Kohlenstoffatomen, eine Alkoxygruppe mit 1 bis 15 Kohlenstoffatomen, eine Arylgruppe mit 6 bis 21 Kohlenstoffatomen, eine Acylgruppe mit 1 bis 15 Kohlenstoffatomen, eine Alkylcarboxylgruppe mit 2 bis 16 Kohlenstoffatomen, eine Aralkylgruppe mit 2 bis 22 Kohlenstoffatomen, eine Alkylcarbonylaminogruppe mit 2 bis 16 Kohlenstoffatomen,eine Alkylsulfaminogruppe mit 1 bis 15 Kohlenstoffatomen, eine Alkylaminogruppe mit 1 bis 15 Kohlenstoffatomen, eine Alkylsulfonylgruppe mit 1 bis 15 Kohlenstoffatomen oder eine Alkenylgruppe mit 2 bis 16 Kohlenstoffatomen wiedergeben;

$R_1$ und $R_4$, $R_2$ und $R_6$ und $R_1$ und $R_2$ Ringe bilden können;

$R_7$ ein Wasserstoffatom, ein Halogenatom, eine Hydroxylgruppe, eine Carboxylgruppe, eine Sulfonsäuregruppe, eine Sulfonamidgruppe, eine Aminogruppe, eine Alkylgruppe mit 1 bis 15 Kohlenstoffatomen, eine Alkoxygruppe mit 1 bis 15 Kohlenstoffatomen, eine Arylgruppe mit 6 bis 21 Kohlenstoffatomen, eine Acylgruppe mit 1 bis 15 Kohlenstoffatomen, eine Alkylcarboxylgruppe mit 2 bis 16 Kohlenstoffatomen, eine Aralkylgruppe mit 7 bis 22 Kohlenstoffatomen, eine Alkylcarbonylaminogruppe mit 2 bis 16 Kohlenstoffatomen, eine Alkylsulfaminogruppe mit 1 bis 15 Kohlenstoffatomen, eine Alkylaminogruppe mit 1 bis 15 Kohlenstoffatomen, eine Alkylsulfonylgruppe mit 1 bis 15 Kohlenstoffatomen, eine Alkenylgruppe mit 2 bis 16 Kohlenstoffatomen, eine Cyanogruppe, eine Nitrogruppe, eine Mercaptogruppe, eine Thiocyanogruppe, eine Chlorsulfonsäuregruppe, eine Alkylthiogruppe mit 1 bis 15 Kohlenstoffatomen, eine Alkylazomethingruppe mit 2 bis 16 Kohlenstoffatomen oder eine Alkylaminosulfonylgruppe mit 1 bis 15 Kohlenstoffatomen bedeutet;

X ein Schwefelatom oder N-$R_8$ ist, worin $R_8$ ein Wasserstoffatom, eine Alkylgruppe mit 1 bis 15 Kohlenstoffatomen, eine Arylgruppe mit 6 bis 21 Kohlenstoffatomen, eine Aralkylgruppe mit 7 bis 22 Kohlenstoffatomen oder eine Alkenylgruppe mit 2 bis 16 Kohlenstoffatomen darstellt;

Y für ein Stickstoffatom oder C-$R_9$ steht, worin $R_9$ synonym ist mit den für $R_7$ angegebenen Bedeutungen; mit der Maßgabe, daß, wenn X für ein Schwefelatom steht, Y ein Stickstoffatom bedeutet und, wenn X für N-$R_8$ steht, Y für C-$R_9$ steht;

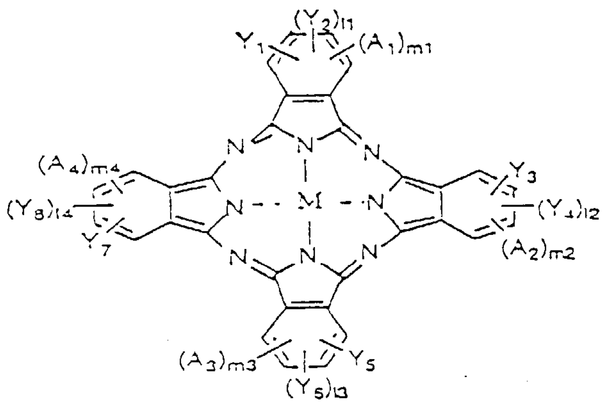

(2)

worin $Y_1$, $Y_2$, $Y_3$, $Y_4$, $Y_5$, $Y_6$, $Y_7$ und $Y_8$ unabhängig ein Wasserstoffatom, eine Kohlenwasserstoffgruppe mit 1 bis 20 Kohlenstoffatomen, eine Alkoxygruppe mit 1 bis 20 Kohlenstoffatomen oder eine Alkylthiogruppe mit 1 bis 20 Kohlenstoffatomen wiedergeben; in den jeweiligen Kombination von $Y_1$ und $Y_2$, $Y_3$ und $Y_4$, $Y_5$ und $Y_6$ und $Y_7$ und $Y_8$ diese unter Bildung von Ringen kombiniert sein können, wenn sie zueinander benachbart vorliegen;

$A_1$, $A_2$, $A_3$ und $A_4$ unabhängig ein Halogenatom oder eine Nitrogruppe darstellen;

$l_1$, $l_2$, $l_3$ und $l_4$ eine ganze Zahl von 0 bis 3 bedeuten;

$m_1$, $m_2$, $m_3$ und $m_4$ für eine ganze Zahl von 0 bis 3 stehen;und

M für zwei Wasserstoffatome, ein zweiwertiges Metallatom, ein dreiwertiges oder vierwertiges, substituiertes Metallatom oder ein Oxymetall steht.

**2.** Optisches Aufzeichnungsmedium gemäß Anspruch 1, worin die in der Farbschicht enthaltene Verbindung mit einem Absorptionsmaximum bei einer Wellenlänge im Bereich von 450 bis 630 nm ein Metallkomplex einer Azoverbindung der folgenden Formel (3)

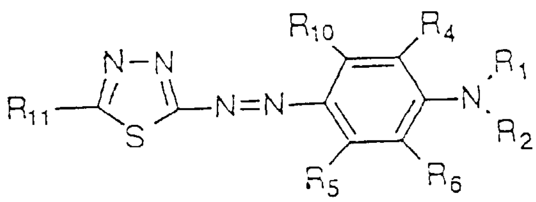

(3)

ist, worin $R_1$, $R_2$, $R_4$, $R_5$ und $R_6$ synonym sind mit den für Formel (1) angegebenen Bedeutungen; $R_{10}$ eine Hydroxylgruppe oder eine Carboxylgruppe bedeutet; und $R_{11}$ für ein Wasserstoffatom oder ein Halogenatom steht.

**3.** Optisches Aufzeichnungsmedium gemäß Anspruch 1,worin die Farbschicht eine einschichtige Struktur umfaßt, die eine Mischung der Azoverbindung der Formel (1) oder des Metallkomplexes hiervon mit einem Absorptionsmaximum bei einer Wellenlänge im Bereich von 450 bis 630 nm und der Phthalocyaninverbindung der Formel (2) mit einem Absorptionsmaximum bei einer Wellenlänge im Bereich von 680 bis 900 nm enthält.

**4.** Optisches Aufzeichnungsmedium gemäß Anspruch 1,worin die Farbschicht eine zweischichtige Struktur einer optischen Interferenzschicht, enthaltend die Azoverbindung der Formel (1) oder den Metallkomplex hiervon mit einem Absorptionsmaximum bei einer Wellenlänge im Bereich von 450 bis 630 nm,und einer Aufzeichnungsschicht, enthaltend die Phthalocyaninverbindung der Formel (2) mit einem Absorptionsmaximum bei einer Wellenlänge im Bereich von 680 bis 900 nm, umfaßt.

**5.** Optisches Aufzeichnungsmedium gemäß Anspruch 4,worin eine Gleichung von 70≤ni x di≤300 sich auf Licht mit

einer Wellenlänge, die für die Aufzeichnung und Reproduktion verwendet wird, bezieht, worin ni einen realen Teil eines komplexen Brechungsindex bedeutet und di eine Schichtdicke in der optischen Interferenzschicht wiedergibt.

**6.** Optisches Aufzeichnungsmedium gemäß einem der Ansprüche 1 bis 5, das befähigt ist zur Aufzeichnung und/oder Reproduktion mit einem Laserstrahl mit einer Wellenlänge $\lambda_1$, ausgewählt unter Wellenlängen im Bereich von 770 bis 830 nm, und das befähigt ist zur Aufzeichnung und/oder Reproduktion ebenfalls mit einem Laserstrahl mit einer Wellenlänge $\lambda_2$, ausgewählt unter Wellenlängen im Bereich von 620 bis 690 nm.

**7.** Optisches Aufzeichnungsmedium gemäß Anspruch 6, das befähigt ist zur Reproduktion mit einem Laserstrahl mit der Wellenlänge $\lambda_2$.

**8.** Optisches Aufzeichnungsmedium gemäß Anspruch 6 oder 7, worin der Laserstrahl mit der Wellenlänge $\lambda_1$ ein Reflexionsvermögen von 65% oder mehr aufweist und der Laserstrahl mit der Wellenlänge $\lambda_2$ ein Reflexionsvermögen von 15% oder mehr aufweist, die durch das Substrat gemessen werden.

**9.** Optisches Aufzeichnungsmedium gemäß Anspruch 8,worin der Laserstrahl mit der Wellenlänge $\lambda_2$ ein Reflexionsvermögen von 20% oder mehr aufweist, das durch das Substrat gemessen wird.

**10.** Metallkomplex einer Azoverbindung der Formel (4)

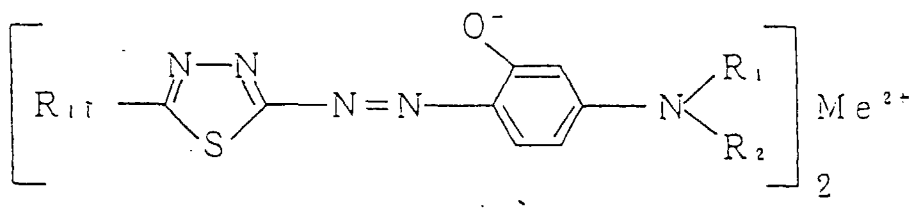

(4)

worin

$R_1$ und $R_2$ unabhängig ein Wasserstoffatom, eine Alkylgruppe mit 1 bis 15 Kohlenstoffatomen, eine Arylgruppe mit 6 bis 21 Kohlenstoffatomen, eine Aralkylgruppe mit 7 bis 22 Kohlenstoffatomen oder eine Alkenylgruppe mit 2 bis 16 Kohlenstoffatomen bedeuten;
$R_{11}$ ein Wasserstoffatom oder ein Halogenatom wiedergibt; Me für Nickel, Kobalt, Kupfer, Palladium, Eisen und Zink steht.

## Revendications

**1.** Support d'enregistrement optique comprenant au moins une couche de colorant, une couche réflectrice et une couche protectnce appliquées sur un substrat, dans lequel ladite couche de colorant contient un composé azoïque représenté par la formule (1) ci-dessous ou un de ses complexes métalliques, ayant un maximum d'absorption à une longueur d'onde comprise entre 450 et 630 nm, et un composé de phtalocyanine représenté par la formule (2) ci-dessous ayant un maximum d'absorption à une longueur d'onde comprise entre 680 et 900 nm :

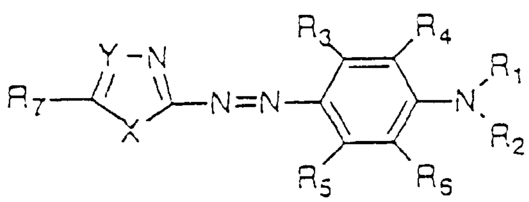

(1)

où $R_1$ et $R_2$ représentent indépendamment un atome d'hydrogène, un groupe alkyle de 1 à 15 atomes de carbone, un groupe aryle de 6 à 21 atomes de carbone, un groupe aralkyle de 7 à 22 atomes de carbone ou un groupe alcényle de 2 à 16 atomes de carbone ;

$R_3$, $R_4$, $R_5$ et $R_6$ représentent indépendamment un atome d'hydrogène, un atome d'halogène, un groupe hydroxyle, un groupe carboxyle, un groupe acide sulfonique, un groupe sulfonamide, un groupe amino, un groupe alkyle de 1 à 15 atomes de carbone, un groupe alcoxyle de 1 à 15 atomes de carbone, un groupe aryle de 6 à 21 atomes de carbone, un groupe acyle de 1 à 15 atomes de carbone, un groupe alkylcarboxyle de à 16 atomes de carbone, un groupe aralkyle de 7 à 22 atomes de carbone, un groupe alkylcarbonylamino de 2 à 16 atomes de carbone, un groupe alkylsulfoamino de 1 à 15 atomes de carbone, un groupe alkylamino de 1 à 15 atomes de carbone, un groupe alkylsulfonyle de 1 à 15 atomes de carbone ou un groupe alcényle de à 16 atomes de carbone ;

$R_1$ et $R_4$, $R_2$ et $R_6$, et $R_1$ et $R_2$ peuvent former des cycles ;

$R_7$ représente un atome d'hydrogène, un atome d'halogène, un groupe hydroxyle, un groupe carboxyle, un groupe acide sulfonique, un groupe sulfonamide, un groupe amino, un groupe alkyle de 1 à 15 atomes de carbone, un groupe alcoxyle de 1 à 15 atomes de carbone, un groupe aryle de 6 à 21 atomes de carbone, un groupe acyle de 1 à 15 atomes de carbone, un groupe alkylcarboxyle de à 16 atomes de carbone, un groupe aralkyle de 7 à 22 atomes de carbone, un groupe alkylcarbonylamino de 2 à 16 atomes de carbone, un groupe alkylsulfoamino de 1 à 15 atomes de carbone, un groupe alkylamino de 1 à 15 atomes de carbone, un groupe alkylsulfonyle de 1 à 15 atomes de carbone, un groupe alcényle de 2 à 16 atomes de carbone, un groupe cyano, un groupe nitro, un groupe mercapto, un groupe thiocyano, un groupe acide chlorosulfonique, un groupe alkylthio de 1 à 15 atomes de carbone, un groupe alkylazométhine de 2 à 16 atomes de carbone ou un groupe alkylaminosulfonyle de 1 à 15 atomes de carbone ;

X représente un atome de soufre ou N-$R_8$, où $R_8$ représente un atome d'hydrogène, un groupe alkyle de 1 à 15 atomes de carbone, un groupe aryle de 6 à 21 atomes de carbone, un groupe aralkyle de 7 à 22 atomes de carbone ou un groupe alcényle de 2 à 16 atomes de carbone ;

Y représente un atome d'azote ou C-$R_9$, où $R_9$ a la définition décrite pour $R_7$ ;

à condition que Y soit un atome d'azote lorsque X est un atome de soufre, et que Y soit C-$R_9$ lorsque X est N-$R_8$.

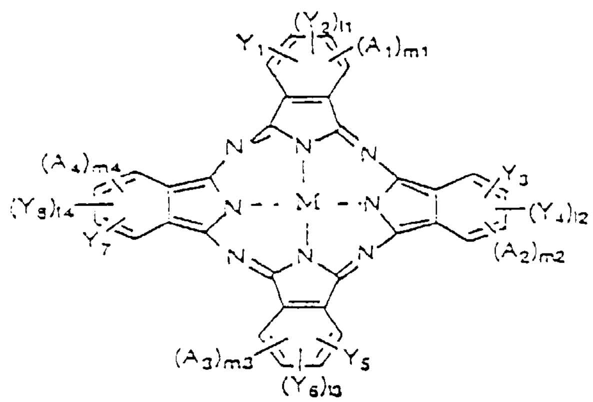

(2)

où $Y_1$, $Y_2$, $Y_3$, $Y_4$, $Y_5$, $Y_6$, $Y_7$ et $Y_8$ représentent indépendamment un atome d'hydrogène, un groupe hydrocarboné de 1 à 20 atomes de carbone, un groupe alcoxyle de 1 à 20 atomes de carbone ou un groupe alkylthio de 1 à 20 atomes de carbone ; dans les combinaisons respectives de $Y_1$ et $Y_2$, $Y_3$ et $Y_4$, $Y_5$ et $Y_6$ et $Y_7$ et $Y_8$, ils peuvent être combinés pour former des cycles lorsqu'ils sont adjacents entre eux ;

$A_1$, $A_2$, $A_3$ et $A_4$ représentent indépendamment un atome d'halogène ou un groupe nitro ;

$l_1$, $l_2$, $l_3$ et $l_4$ représentent un entier de 0 à 3;

$m_1$, $m_2$, $m_3$ et $m_4$ représentent un entier de 0 à 3 ; et

M représente deux atomes d'hydrogène, un atome de métal divalent, un atome de métal trivalent ou tétravalent substitué, ou un oxy-métal.

2. Support d'enregistrement optique selon la revendication 1, dans lequel le composé contenu dans la couche de colorant et ayant un maximum d'absorption à une longueur d'onde comprise entre 450 et 630 nm est un complexe métallique d'un composé azoïque représenté par la formule (3) ci-dessous :

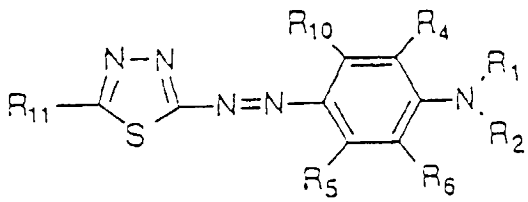

(3)

dans laquelle $R_1$, $R_2$, $R_4$, $R_5$ et $R_6$ ont la définition décrite pour la formule (1); $R_{10}$ représente un groupe hydroxyle ou un groupe carboxyle ; et $R_{11}$ représente un atome d'hydrogène ou un atome d'halogène.

3. Support d'enregistrement optique selon la revendication 1, dans lequel la couche de colorant comprend une structure monocouche contenant un mélange du composé azoïque représenté par la formule (1) ou de son complexe métallique, ayant un maximum d'absorption à une longueur d'onde comprise entre 450 et 630 nm, et du composé de phtalocyanine représenté par la formule (2), ayant un maximum d'absorption à une longueur d'onde comprise entre 680 et 900 nm.

4. Support d'enregistrement optique selon la revendication 1, dans lequel la couche de colorant comprend une structure à deux couches constituée d'une couche d'interférence optique contenant le composé azoïque représenté par la formule (1) ou son complexe métallique, ayant un maximum d'absorption à un longueur d'onde comprise entre 450 et 630 nm, et une couche d'enregistrement contenant le composé de phtalocyanine représenté par la formule (2) ayant un maximum d'absorption à une longueur d'onde comprise entre 680 et 900 nm.

5. Support d'enregistrement optique selon la revendication 4, dans lequel l'équation $70 \leq ni \times di \leq 300$ s'applique à la lumière ayant la longueur d'onde utilisée pour l'enregistrement et la reproduction, où ni représente la partie réelle d'un indice de réfraction complexe et di représente l'épaisseur de couche de la couche d'interférence optique.

6. Support d'enregistrement optique selon l'une quelconque des revendications 1 à 5, pouvant enregistrer et/ou reproduire avec un rayon laser ayant une longueur d'onde $\lambda_1$ choisie parmi les longueurs d'onde comprises entre 770 et 830 nm et pouvant aussi enregistrer et/ou reproduire avec un rayon laser ayant une longueur d'onde $\lambda_2$ choisie parmi les longueurs d'onde comprises entre 620 et 690 nm.

7. Support d'enregistrement optique selon la revendication 6, pouvant reproduire avec un rayon laser ayant la longueur d'onde $\lambda_2$.

8. Support d'enregistrement optique selon la revendication 6 ou la revendication 7, dans lequel le rayon laser ayant la longueur d'onde $\lambda_1$ a un facteur de réflexion d'au moins 65 %, et le rayon laser ayant la longueur d'onde $\lambda_2$ a un facteur de réflexion d'au moins 15 %, ces facteurs de réflexion étant mesurés à travers le substrat.

9. Support d'enregistrement optique selon la revendication 8, dans lequel le rayon laser ayant la longueur d'onde $\lambda_2$ a un facteur de réflexion, mesuré à travers le substrat, d'au moins 20 %.

10. Complexe métallique d'un composé azoïque, représenté par la formule (4)

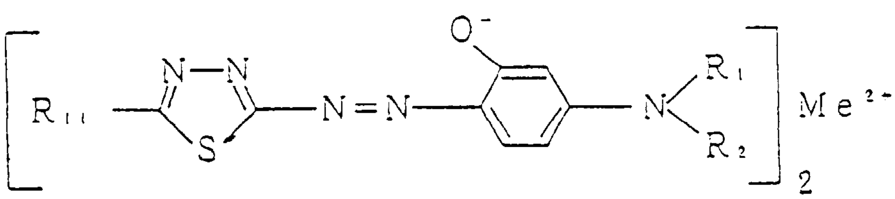

(4)

dans laquelle

$R_1$ et $R_2$ représentent indépendamment un atome d'hydrogène, un groupe alkyle de 1 à 15 atomes de carbone, un groupe aryle de 6 à 21 atomes de carbone, un groupe aralkyle de 7 à 22 atomes de carbone ou un groupe alcényle de 2 à 16 atomes de carbone ;
$R_{11}$ représente un atome d'hydrogène ou un atome d'halogène ;
Me représente le nickel, le cobalt, le cuivre, le palladium, le fer et le zinc.

*Fig.1*